# NEUE EUROPÄISCHE PATENTSCHRIFT

(11) **EP 1 572 809 B2**
(45) Veröffentlichungstag und Bekanntmachung des Hinweises auf die Entscheidung über den Einspruch: **18.11.2009**
(45) Hinweis auf die Patenterteilung: 07.06.2006
(21) Anmeldenummer: 03782237.6
(22) Anmeldetag: 27.11.2003
(51) Int. Cl.: C09B 67/12, C09B 67/22

(54) **VERFAHREN ZUR HERSTELLUNG VON PHTHALOCYANINPIGMENTZUBEREITUNGEN**
METHOD FOR THE PRODUCTION OF PHTHALOCYANINE PIGMENT PREPARATIONS
PROCEDE POUR PRODUIRE DES PREPARATIONS DE PIGMENTS DE PHTALOCYANINE

(30) Priorität: 10.12.2002 DE 10257498
(43) Veröffentlichungstag der Anmeldung: 14.09.2005
(73) Patentinhaber: Clariant Produkte (Deutschland) GmbH, 65929 Frankfurt am Main (DE)
(72) Erfinder: BRYCHCY, Klaus, 60488 Frankfurt am Main (DE); WEBER, Joachim, 65929 Frankfurt am Main (DE); MEHLER, Heidrun, 63697 Hirzenhein (DE)
(86) Internationale Anmeldenummer: PCT/EP2003/013362
(87) Internationale Veröffentlichungsnummer: WO 2004/052996

(56) Entgegenhaltungen:
- EP-A- 0 574 790
- WO-A-01/66650
- WO-A1-99//54410
- DE-A- 2 720 464
- DE-A1- 2 554 252
- US-A- 4 313 766
- US-A- 5 296 034

## Beschreibung

Die Erfindung betrifft ein Verfahren zur Herstellung einer Pigmentzubereitung auf Basis eines Phthalocyaninpigments und ihre Verwendung zum Färben von hochmolekularen Materialien.

Beim Einsatz von Pigmenten zum Herstellen von Druckfarbensystemen werden hohe Anforderungen an die anwendungstechnischen Eigenschaften der Pigmente gestellt, wie leichte Dispergierbarkeit, anwendungsgerechte Fließfähigkeit der Druckfarben, hohe Transparenz, Glanz, Farbstärke und Reinheit des Farbtons. Außerdem ist eine möglichst universelle Einsetzbarkeit zum Färben von anderen hochmolekularen Systemen, wie beispielsweise von Lacken oder Kunststoffen wünschenswert. Hier kommen weitere teilweise auch an Druckfarben gestellte Anforderungen hinzu, wie beispielsweise hohe Echtheiten wie Ausblutechtheit, Überlackierechtheit, Lösemittelechtheit, Licht- und Wetterechtheiten. Sowohl bei Druckfarben als auch bei Lacken wird die Einsetzbarkeit sowohl in wasser- als auch in lösemittelbasierenden Systemen gewünscht. Bei Lackierungen sind neben hochtransparenten Pigmenten, besonders für Metalliceinfärbungen, auch deckende Pigmente gefordert. Im Falle von Lacken ist die Möglichkeit gewünscht, hochpigmentierte Lackkonzentrate (Millbase) mit dennoch niedriger Viskosität herstellen zu können, ebenso geht der Trend bei den Anreibeformulierungen von Druckfarben hin zu hohen Pigmentierungskonzentrationen.

Die Synthese der Phthalocyanine ist seit langem bekannt. Die bei der Synthese grobkristallin anfallenden Phthalocyanine, im folgenden Rohpigmente genannt, können ohne Zerkleinerung wegen ihrer ungenügenden anwendungstechnischen Eigenschaften nicht zum Färben von hochmolekularen Materialien verwendet werden.

Es sind verschiedene Verfahren vorgeschlagen worden, wie ein Phthalocyaninpigment hergestellt werden kann. Prinzipiell müssen dazu die grobkristallinen Rohpigmente zerkleinert werden, beispielsweise durch Acidpasting, Acidswelling, Trocken- oder Nassmahlung. Die erhaltenen Produkte, im folgenden Präpigmente genannt, sind meist von schlechter Kristallqualität, sind agglomeriert und zeigen noch nicht die gewünschten anwendungstechnischen Eigenschaften. Zum Erzielen optimaler Anwendbarkeit wird eine Nachbehandlung, im allgemeinen als Finish bezeichnet, durchgeführt, beispielsweise in Lösemitteln und unter Zusatz oberflächenaktiver Mittel. Dabei wird zur Verbesserung der anwendungstechnischen Eigenschaften auch die Herstellung von Pigmentzubereitungen durch Einsatz von mit Sulfonsäure-, Carbonsäure oder Sulfonamidgruppen substituierten Phthalocyaninen vorgeschlagen.

Die DE 27 20 464 offenbart ein Verfahren, bei dem ein Phthalocyaninpigment einer Lösemittelbehandlung in Gegenwart eines Phthalocyaninsulfonsäuresalzes unterzogen wird.

Die EP 20 306 offenbart ein Verfahren, bei dem nach der Feinverteilung das Mahlgut in Gegenwart eines basischen Phthalocyaninderivats einer Behandlung bei erhöhter Temperatur unterzogen wird.

Die EP 574 790 offenbart ein Verfahren, bei dem zur Feinverteilung spezielle Rührwerkskugelmühlen eingesetzt werden.

Die EP 761 770 offenbart ein Verfahren zur Herstellung von Phthalocyaninpigmenten, bei dem das Phthalocyaninsulfonsäuresalz nach dem Finish in wässriger Suspension zugegeben wird.

Die nach diesen Verfahren hergestellten Pigmente genügen nicht immer allen heutzutage gestellten Anforderungen. Es bestand daher ein Bedarf nach einem neuen Verfahren, mit dem Pigmente mit verbesserten anwendungstechnischen Eigenschaften effizient und kostengünstig hergestellt werden können.

Überraschenderweise konnte die Aufgabe durch das nachstehend beschriebene Herstellungsverfahren gelöst werden.

Gegenstand der Erfindung ist ein Verfahren zur Herstellung einer Phthalocyanin-Pigmentzubereitung, dadurch gekennzeichnet, dass ein Phthalocyanin-Rohpigment durch ein Verfahren aus der Gruppe Trockenmahlung, Nassmahlung in einem inerten flüssigen Medium in einer herkömmlichen kontinuierlichen oder diskontinuierlichen Niederenergie-Rührwerkskugelmühle statt, die mit einer Leistungsdichte von unter 2,5 kW pro Liter Mahlraum und einer Rührwerksumfangsgeschwindigkeit von unter 12 m/s, vorzugsweise unter 10 m/s, betrieben wird, unter der Einwirkung von Mahlkörpern, Salzknetung, Acid Pasting und Acid Swelling unter Bildung eines Präpigments feinverteilt wird und dann das Präpigment einer Finish-Behandlung, in einer Mischung aus Wasser und einem organischen Lösemittel bei einem pH größer oder gleich 9, bei einer Temperatur von 100 bis 250 und in Gegenwart mindestens eines Pigmentdispergators aus der Gruppe der Phthalocyaninsulfonsäuren, Phthalocyanincarbonsäuren, Phthalocyaninsulfonsäuresalze, Phthalocyanincarbonsäuresalze und Phthalocyaninsulfonamide unterzogen wird.

Als Rohpigment wird ein halogeniertes oder halogenfreies, metallfreies oder metallatomhaltiges Phthalocyanin eingesetzt, wie es beispielsweise aus der Synthese anfällt. Metalle können beispielsweise Cu, Fe, Co, Zn, Sn, Cd, Ni, Ti oder Al sein, bevorzugt wird Kupferphthalocyanin eingesetzt. Das Phthalocyanin kann mit bis zu 16 Halogenatomen, wie beispielsweise Chlor und Brom, substituiert sein. Die eingesetzten Phthalocyanine können in unterschiedlicher Phase vorliegen, beispielsweise alpha, beta, gamma, delta oder epsilon. Bevorzugt werden Kupferphthalocyanine, die halogenfrei sind oder einen nur geringen Chlorgehalt, beispielsweise bis 6 %, aufweisen, eingesetzt, insbesondere die aus der Synthese in der beta-Phase anfallenden Kupferphthalocyanine. Als Kupferphthalocyanin der alpha-Phase werden bevorzugt solche mit einem Chlorgehalt von bis zu 20% eingesetzt, beispielsweise Semichlorkupferphthalocyanin, Monochlorkupferphthalocyanin oder sogenanntes Tri-/Tetrachlorkupfer-phthalocyanin. Es kann auch eine Mischung aus unterschiedlichen Phthalocyanin-Rohpigmenten eingesetzt werden.
Das direkt nach der Synthese vorliegende Kupferphthalocyanin-Rohpigment enthält meist noch bis zu ca. 35 % bei der Synthese entstandener Salze. Gewöhnlicherweise werden diese aus der Synthese stammenden Salze durch einen alkalischen und/oder sauren wässrigen Auszug entfernt. Im erfindungsgemäßen Verfahren kann sowohl das synthesesalzhaltige als auch das vom Synthesesalz gereinigte Rohpigment eingesetzt werden.

Die Trockenmahlung erfolgt mit oder ohne Mahlhilfsmittel. Als Mahlhilfsmittel kommen Alkalimetall- oder Erdalkalimetallsalze von anorganischen Säuren, beispielsweise Salzsäure oder Schwefelsäure, oder von organischen Säuren mit 1 bis 4 Kohlenstoffatomen, beispielsweise Ameisensäure und Essigsäure, in Frage. Bevorzugte Salze sind Natriumformiat, Natriumacetat, Calciumacetat, Natriumchlorid, Kaliumchlorid, Calciumchlorid, Natriumsulfat, Aluminiumsulfat oder Mischungen dieser Salze. Die Mahlhilfsmittel können in beliebiger Menge eingesetzt werden, beispielsweise in bis zur 5-fachen Menge, bezogen auf das Gewicht des Rohpigments. Auch größere Mengen können eingesetzt werden, sind jedoch unwirtschaftlich.
Bei der Trockenmahlung können organische Flüssigkeiten in solchen Mengen, z.B. bis zu 15 Gew.-%, vorzugsweise bis zu 10 Gew.-%, bezogen auf Mahlgut, zum Einsatz kommen, dass das Mahlgut noch eine rieselfähige Konsistenz beibehält. Beispiele für solche Flüssigkeiten sind Alkohole mit 1 bis 10 C-Atomen, wie beispielsweise Methanol, Ethanol, n-Propanol, Isopropanol, Butanole, wie n-Butanol, iso-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Di-, Tri- oder Tetraethylenglykol, Propylenglykol, Di-, Tri- oder Tetrapropylenglykol, Sorbitol oder Glycerin; Polyglykole, wie Polyethylen- oder Polypropylenglykole; Ether, wie Methylisobutylether, Tetrahydrofuran, Dimethoxyethan oder Dioxan; Glykolether, wie Monoalkylether des Ethylen- oder Propylenglykols oder Diethylenglykol-monoalkylether, wobei Alkyl für Methyl, Ethyl, Propyl, und Butyl stehen kann, beispielsweise Butylglykole oder Methoxybutanol; Polyethylenglykolmonomethylether, insbesondere solche mit einer mittleren molaren Masse von 350 bis 550 g/mol, und Polyethylenglykoldimethylether, insbesondere solche mit einer mittleren molaren Masse von 250 bis 500 g/mol; Ketone, wie Aceton, Diethylketon, Methylisobutylketon, Methylethylketon oder Cyclohexanon; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C₁-C₆-alkylester, wie Ameisensäurebutylester, Essigsäureethylester oder Propionsäurepropylester; oder Carbonsäure-C₁-C₆-glykolester; oder Glykoletheracetate, wie 1-Methoxy-2-propylacetat; oder Phthalsäuredi- oder Benzoesäurealkylester, wie Benzoesäure-C₁-C₄-alkylester oder C₁-C₁₂₋Alkylphthalsäurediester; cyclische Ester, wie Caprolacton; Nitrile, wie Acetonitril, aliphatische oder aromatische Amine, wie beispielsweise Dimethylanilin oder Diethylanilin; gegebenenfalls halogenierte aliphatische Kohlenwasserstoffe oder aromatische Kohlenwasserstoffe wie Benzin, Pinen, Tetrachlorkohlenstoff, Tri- oder Tetrachlorethylen, Tetrachlorethane, Benzol oder durch Alkyl, Alkoxy, Nitro, Cyano oder Halogen substituiertes Benzol, beispielsweise Toluol, Xylole, Ethylbenzol, Anisol, Nitrobenzol, Chlorbenzol, Dichlorbenzole, Trichlorbenzole, Benzonitril oder Brombenzol; oder andere substituierte Aromaten, wie Phenole, Aminophenole, Kresole, Nitrophenole, Phenoxyethanol oder 2-Phenylethanol; aromatische Heterocyclen, wie Pyridin, Morpholin, Picolin oder Chinolin; 1,3-Dimetyl-2-imidazolidinon; Sulfone und Sulfoxide, wie Dimethylsulfoxid und Sulfolan; sowie Mischungen dieser organischen Flüssigkeiten. Bevorzugt werden solche eingesetzt, die kristallisierende und/oder Phasen-bestimmende Eigenschaften haben. Bevorzugt werden Glykole und Glykolether, wie Ethylenglykol, Diethylenglykol oder Butylglykol, Amine, wie beispielsweise Anilin, Diethylanilin, Dimethylanilin, n-Butylamin, o-Toluidin oder Talgfettpropylendiamin, Dimethylformamid, N-Methylpyrrolidon, Triethanolamin, Toluol, Xylol, Cumen, Mesitylen oder Octylbenzol verwendet.

Bei der Trockenmahlung können des weiteren auch Säuren in solchen Mengen, z.B. bis zu 15 Gew.-%, bevorzugt bis zu 10 Gew.-%, bezogen auf Mahlgut, zum Einsatz kommen, dass das Mahlgut seine rieselfähige Konsistenz behält. Es können die aus der Literatur bekannten Säuren eingesetzt werden, beispielsweise die in der DE 28 51 752 oder in der EP 780 446 angeführten Säuren. Bevorzugt wird Phosphorsäure, Ameisensäure, Essigsäure, Methansulfonsäure, Dodecylbenzolsulfonsäure und insbesondere Schwefelsäure eingesetzt.

Die Trockenmahlung kann in bekannter Weise auf diskontinuierlichen oder kontinuierlichen Roll- oder Schwingmühlen erfolgen. Als Mahlkörper kommen alle in der Literatur bekannten in Betracht, beispielsweise Kugeln, Zylinder oder Stangen und als Materialien Stahl, Porzellan, Steatit, Oxide, wie z.B. Aluminiumoxid oder gegebenenfalls stabilisiertes Zirkonoxid, Mischoxide, wie z.B. Zirkonmischoxid, oder Glas, wie z.B. Quarzglas. Die Mahlung kann bei Temperaturen bis zu 200°C stattfinden, gewöhnlicherweise werden jedoch Temperaturen unter 100°C angewendet. Die Verweilzeit in der Mühle richtet sich nach der gewünschten Anforderung und nach der Qualität des eingesetzten Rohpigments und hängt außerdem erheblich vom Mahlaggregat und von Form und Material der eingesetzten Mahlkörper ab. Sie kann beispielsweise bei Schwingmahlung zwischen 15 Minuten und 25 Stunden, zweckmäßigerweise zwischen 30 Minuten und 15 Stunden, vorzugsweise zwischen 30 Minuten und 9 Stunden, bei Rollmahlung zwischen 5 und 100 Stunden, zweckmäßigerweise zwischen 8 und 50 Stunden, bevorzugt zwischen 10 und 30 Stunden, betragen.

Wenn Mahlhilfsmittel, organische Flüssigkeiten oder Säuren bei der Trockenmahlung eingesetzt wurden, können diese vor der Lösemittelbehandlung entfernt werden. Dies empfiehlt sich besonders bei Einsatz größerer Mengen an Mahlhilfsmitteln. Dazu wird das Mahlgut mit Wasser zu einer wässrigen Suspension angerührt, die Zusatzstoffe gelöst und durch Filtration vom Präpigment getrennt. Bewährt hat sich bei dieser Behandlung das Einstellen eines sauren pH durch Zugabe von Säure, beispielsweise Salzsäure oder Schwefelsäure. Es kann auch ein alkalischer pH gewählt werden, z.B. um eine eingesetzte Säure zu lösen. Es kann auf eine Entfernung auch verzichtet werden, besonders bei Einsatz geringer Mengen Mahlhilfsmittel, organischer Flüssigkeiten oder Säuren. Diese können auch durch das beim Finish eingesetzte Wasser gelöst werden bzw. durch eine entsprechende Menge Base neutralisiert werden.

Die Nassmahlung: Als Mahlkörper dienen Kugeln aus beispielsweise Stahl, Porzellan, Steatit, Oxiden, wie beispielsweise Aluminiumoxid oder gegebenenfalls stabilisiertes Zirkonoxid, Mischoxiden, wie beispielsweise Zirkonmischoxid, Glas, wie beispielsweise Quarzglas, mit einem Durchmesser von mindestens 0,3 mm, vorzugsweise mindestens 0,5 mm, insbesondere mindestens 1 mm. Die Abtrennung der Mahlkörper vom Mahlgut erfolgt bei kontinuierlichen Rührwerkskugelmühlen vorzugsweise durch Zentrifugalabscheidung. Als flüssiges Medium kommt ein wässriges, wässrig-organisches oder organisches Medium in Frage, vorzugsweise wässrig oder wässrig-organisch. Als organische Flüssigkeit kommen die oben genannten Lösemittel in Frage, die auch bei der trockenen Mahlung zum Einsatz kommen können, vorzugsweise C₁-C₈-Alkanole wie Methanol, Ethanol, n-Propanol, Isopropanol, N-Butanol, tert.-Butanol, Isobutanol, Pentanole, Hexanole oder Alkylhexanole; cyclische Alkanole wie Cyclohexanol; C₁-C₅₋Dialkylketone wie Aceton, Diethylketon, Methylisobutylketon oder Methylethylketon; Ether und Glykolether wie Tetrahydrofuran, Dimethoxyethan, Methylglykol, Ethylglykol, Butylglykol, Ethyldiglykol, Methoxypropanol oder Methoxybutanol; aliphatische Säureamide wie Formamid oder Dimethylformamid; cyclische Carbonsäureamide wie N-Methylpyrrolidon, Valero- oder Caprolactam; heterocyclische Basen wie Pyridin, Morpholin oder Picolin; Dimethylsulfoxid; aromatische Kohlenwasserstoffe wie Toluol, Xylole oder Ethylbenzol; aromatische Halogenkohlenwasserstoffe wie Chlorbenzol, o-Dichlorbenzol, 1,2,4-Trichlorbenzol oder Brombenzol sowie substituierte Aromaten wie Nitrobenzol oder Phenol. Insbesondere werden Mischungen dieser organischen Flüssigkeiten mit Wasser eingesetzt.
Im Falle eines wässrigen oder wässrig-organischen Mediums kann bei beliebigem pH gemahlen werden, bevorzugt wird bei neutralem oder alkalischen pH gemahlen, wobei die pH-Stabilität bei der Wahl einer organischen Flüssigkeit beachtet werden muss.
Die Festkörpermenge im Mahlgut ist abhängig von der Rheologie der Suspension und beträgt zweckmäßigerweise höchstens 40 Gew.-%, vorzugsweise 2,5 bis 35 Gew.-%, insbesondere 5 bis 25 Gew.-%, der Mahlgutsuspension.
Die Mahlung wird bei Temperaturen im Bereich von 0 bis 100°C, zweckmäßig zwischen 10 und 60°C, vorzugsweise bei 15 bis 50°C, durchgeführt.
Die Verweilzeit des Mahlguts in der Rührwerkskugelmühle liegt im allgemeinen zwischen 5 Minuten und 5 Stunden, zweckmäßig zwischen 10 Minuten und 2 Stunden.
Die gebildete Suspension des Präpigments kann ohne Zwischenisolierung beim Finish eingesetzt werden, das Präpigment kann auch vorher isoliert werden. Wenn gewünscht, kann auch die organische Flüssigkeit nach der Nassmahlung entfernt werden. Dies kann beispielsweise bei entsprechender Wahl der organischen Flüssigkeit durch Wasserdampfdestillation geschehen.

Die Salzknetung kann in einer aus der Literatur bekannten Art und Weise erfolgen. Dazu wird das Rohpigment mit einer organischen Flüssigkeit und mit Salz in Form einer knetbaren, hochviskosen Paste geknetet. Als Salze und als organische Flüssigkeiten können die gleichen wie die bei der Trockenmahlung erwähnten eingesetzt werden. Die Temperatur bei der Knetung soll über dem Schmelzpunkt und unter dem Siedepunkt der organischen Flüssigkeit liegen.
Auch bei der Salzknetung können die oben erwähnten Säuren eingesetzt werden. Als Kneter kommen die bekannten kontinuierlichen und diskontinuierlichen Kneter in Betracht, bevorzugt werden zweiarmige diskontinuierliche Kneter eingesetzt. Bei der Salzknetung werden meist größere Mengen Salz und organische Flüssigkeit eingesetzt, so dass deren Entfernung vor dem Finish durch beispielsweise einen wässrigen Auszug bei saurem pH üblich ist.

Mit Acid Swelling wird eine bekannte Behandlung beschrieben, bei der das Rohpigment in einer Säure bei einer solchen Säurekonzentration und Menge suspendiert wird, die zur Salzbildung ausreicht, nicht jedoch zum Auflösen des Rohpigments. Gewöhnlicherweise wird dazu ca. 50 bis 80 gew.-%ige, vorzugsweise ca. 60 bis 80 gew.-%ige, Schwefelsäure eingesetzt, zweckmäßigerweise in einer 3 bis 15-fachen Gewichtsmenge, bezogen auf Rohpigment.

Unter Acid Pasting wird das vollständige Auflösen und Fällen des Rohpigments in geeigneten Säuren verstanden. Bevorzugt werden Säuren wie Schwefelsäure, Chlorsulfonsäure und Polyphosphorsäuren verwendet. Als Fällmedium kommen Wasser, organische Lösemittel oder Mischungen daraus zum Einsatz. Bevorzugt erfolgt die Fällung unter turbulenten Strömungsbedingungen. Wird Schwefelsäure eingesetzt, sollte deren Konzentration größer als 90 Gew.-% sein, üblicherweise wird konzentrierte Schwefelsäure mit ca. 96 Gew.-% oder Monohydrat eingesetzt. Im allgemeinen wird die 2 bis 20-fache Gewichtsmenge an Säure, bezogen auf Rohpigment, eingesetzt.

Sowohl nach dem Acid Swelling als auch nach dem Acid Pasting wird zweckmäßigerweise das Präpigment vor dem Finish isoliert, um die Säure weitgehend zu entfernen.

Das durch das gewählte Feinverteilungsverfahren gebildete Präpigment kann in trockener Form oder als Presskuchen beim Finish eingesetzt werden, bevorzugt wird es als wässrig-feuchter Presskuchen eingesetzt.

Das zum Finish eingesetzte Lösemittelsystem besteht aus Wasser, organischem Lösemittel und einer zum Einstellen eines alkalischen pH erforderlichen Menge einer Base.
Als organisches Lösemittel kommen in Frage: Alkohole mit 1 bis 10 C-Atomen, wie beispielsweise Methanol, Ethanol, n-Propanol, Isopropanol, Butanole, wie n-Butanol, iso-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Diethylenglykol, Propylenglykol, Dipropylenglykol, Sorbitol oder Glycerin; Polyglykole, wie Polyethylen- oder Polypropylenglykole; Ether, wie Methylisobutylether, Tetrahydrofuran, Dimethoxyethan oder Dioxan; Glykolether, wie Monoalkylether des Ethylen- oder Propylenglykols oder Diethylenglykol-monoalkylether, wobei Alkyl für Methyl, Ethyl, Propyl, und Butyl stehen kann, beispielsweise Butylglykole oder Methoxybutanol; Polyethylenglykolmonomethylether, insbesondere solche mit einer mittleren molaren Masse von 350 bis 550 g/mol, und
Polyethylenglykoldimethylether, insbesondere solche mit einer mittleren molaren Masse von 250 bis 500 g/mol; Ketone, wie Aceton, Diethylketon, Methylisobutylketon, Methylethylketon, Methylisobutylketon oder Cyclohexanon; -aliphatische Säureamide, wie Formamid, Dimethylformamid,
N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Nitrile, wie Acetonitril, aliphatische oder aromatische Amine, wie beispielsweise n-Butylamin, gegebenenfalls halogenierte aliphatische Kohlenwasserstoffe oder aromatische Kohlenwasserstoffe wie Cyclohexan, Methylcyclohexan, Methylenchlorid, Tetrachlorkohlenstoff, Di-, Tri- oder Tetrachlorethylen, Di- oder Tetrachlorethane oder wie Benzol oder durch Alkyl, Alkoxy, Nitro, Cyano oder Halogen substituiertes Benzol, beispielsweise Toluol, Xylole, Mesitylen, Ethylbenzol, Anisol, Nitrobenzol, Chlorbenzol, Dichlorbenzole, Trichlorbenzole, Benzonitril oder Brombenzol; oder andere substituierte Aromaten, wie Phenole, Kresole, Nitrophenole, wie beispielsweise o-Nitrophenol,
Phenoxyethanol oder 2-Phenylethanol; aromatische Heterocyclen, wie Pyridin, Morpholin, Picolin oder Chinolin; 1,3-Dimetyl-2-imidazolidinon; Sulfone und Sulfoxide, wie Dimethylsulfoxid und Sulfolan; sowie Mischungen dieser organischen Lösemittel.
Bevorzugte Lösemittel sind C₁-C₆-Alkohole, insbesondere Methanol, Ethanol, n- und Isopropanol, Isobutanol, n- und tert.-Butanol und tert.-Amylalkohol; C₃-C₆₋Ketone, insbesondere Aceton, Methylethylketon oder Diethylketon;
Tetrahydrofuran, Dioxan, Ethylenglykol, Diethylenglykol oder Ethylenglykol-C₃-C₅₋alkylether, insbesondere 2-Methoxyethanol, 2-Ethoxyethanol, Butylglykol, Toluol, Xylol, Ethylbenzol, Chlorbenzol, o-Dichlorbenzol, Nitrobenzol, Cyclohexan oder Methylcyclohexan.

Um einen alkalischen pH einzustellen, werden als Basen bevorzugt Alkali- und/oder Erdalkalihydroxide, ggf. in Form ihrer wässrigen Lösungen, wie Natrium- oder Kaliumhydroxid verwendet. Denkbar sind auch stickstoffhaltige Basen, wie z.B. Ammoniak oder Methylamin.

Um den gewünschten Effekt zu erzielen, ist ein pH von größer oder gleich 9,0 vorteilhaft, bevorzugt pH größer oder gleich 10, insbesondere pH größer oder gleich 10,5. Gewöhnlich wird bei einem pH größer oder gleich 11,0 gearbeitet. Die Base kann auch in großen Mengen von bis zu 20 Gew.-%, bevorzugt bis zu 15 Gew.-%, insbesondere bis zu 10 Gew.-%, bezogen auf die Menge an Wasser, eingesetzt werden.

Das Gewichtsverhältnis Wasser zu organischem Lösemittel beträgt 5 zu 95 bis 95 zu 5, bevorzugt 7,5 zu 92,5 bis 92,5 zu 7,5, insbesondere 10 zu 90 bis 90 zu 10 und besonders bevorzugt 20 zu 80 bis 80 zu 20.
Die Gesamtmenge Wasser und organisches Lösemittel liegt im Bereich von 0,5 bis 40, bevorzugt von 1 bis 20, insbesondere von 2 bis 15, Gewichtsteilen pro Gewichtsteil Pigment.

Das Lösemittelsystem kann ein- oder zweiphasig vorliegen. Bevorzugt werden solche organischen Lösemittel eingesetzt, die mit Wasser nicht vollständig mischbar sind, und der Finish wird bevorzugt in einem zweiphasigen Lösemittelsystem mit einer wässrigen und einer organischen Phase durchgeführt. Der Finish im erfindungsgemäßen Verfahren kann bei einer Temperatur von 100 bis 250°C, insbesondere 100 bis 190°C, und zweckmäßigerweise für eine Zeit von 5 Minuten bis 24 Stunden, besonders 5 Minuten bis 18 Stunden, insbesondere 5 Minuten bis 12 Stunden, durchgeführt werden. Bevorzugt wird der Finish bei Siedetemperatur, insbesondere bei Temperaturen oberhalb des Siedepunktes des Lösemittelsystems unter Druck durchgeführt.

Die im erfindungsgemäßen Verfahren eingesetzten Pigmentdispergatoren sind an sich bekannt und werden durch die allgemeine Formel (I) wiedergegeben, 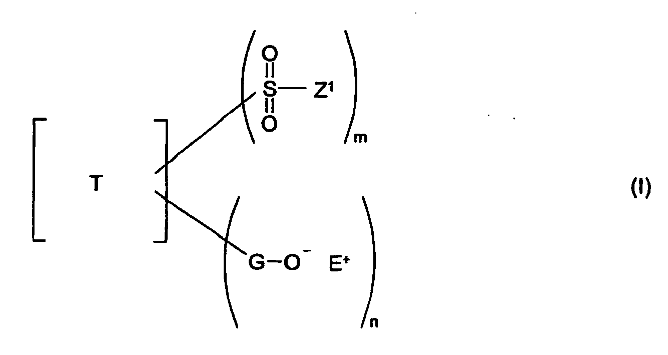 worin
- T: einen Phthalocyaninrest darstellt, der entweder metallfrei ist oder ein Metallatom aus der Gruppe Cu, Fe, Zn, Ni, Co, Al, Ti oder Sn enthält, insbesondere Cu, und der mit 1 bis 4 Chloratomen substituiert oder vorzugsweise chlorfrei ist;
- m und n: gleich oder verschieden sind und eine Zahl von 0 bis 4 darstellen mit der Maßgabe, dass die Summe von m und n eine Zahl von 1 bis 4 beträgt;
und worin der Rest Z¹ einen Rest der Formel (la) darstellt, 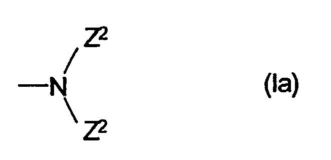 worin die beiden Reste Z² gleich oder verschieden sind und
ein Rest der Formel (Ib) bedeuten,

-[X-Y]ₕ-R³ (Ib)

worin
- h: eine Zahl von 0 bis 100, vorzugsweise 0 bis 20, besonders bevorzugt 0, 1, 2, 3, 4 oder 5;
- X: einen C₂-C₆-Alkylenrest, einen C₅-C₇-Cycloalkylenrest, oder eine Kombination dieser Reste ist, wobei diese Reste durch 1 bis 4 C₁-C₄₋Alkylreste, Hydroxyreste, C₁-C₄-Alkoxyreste, (C₁-C₄)-Hydroxyalkylreste und/oder durch 1 bis 2 weitere C₅-C₇-Cycloalkylreste substituiert sein können, oder worin X, wenn h > 1 ist, auch eine Kombination der genannten Bedeutungen sein kann;
- y: eine -O-, 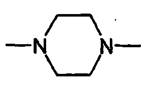 oder eine -NR²-Gruppe, oder worin Y, wenn h > 1 ist, auch eine Kombination der genannten Bedeutungen sein kann;
- R² und R³: unabhängig voneinander ein Wasserstoffatom, eine substituierte oder unsubstituierte, oder teil- oder perfluorierte, verzweigte oder unverzweigte
C₁-C₂₀-Alkylgruppe, eine substituierte oder unsubstituierte C₅-C₈₋Cycloalkylgruppe oder eine substituierte oder unsubstituierte, oder teil- oder perfluorierte C₂-C₂₀-Alkenylgruppe darstellen, wobei die Substituenten Hydroxy, Phenyl, Cyano, Chlor, Brom, Amino, C₂-C₄-Acyl oder C₁-C₄-Alkoxy sein und vorzugsweise 1 bis 4 an der Zahl sein können, oder
- R² und R³: zusammen mit dem N-Atom der NR²-Gruppe einen gesättigten, ungesättigten oder aromatischen heterocyclischen 5- bis 7-gliedrigen Ring bilden, der gegebenenfalls 1 oder 2 weitere Stickstoff-, Sauerstoff- oder Schwefelatome oder Carbonylgruppen im Ring enthält, gegebenenfalls durch 1, 2 oder 3 Reste aus der Gruppe OH, NH₂, Phenyl, CN, Cl, Br, C₁-C₄-Alkyl, C₁-C₄-Alkoxy, C₂-C₄-Acyl und Carbamoyl substituiert ist, und der gegebenenfalls 1 oder 2 benzoannellierte gesättigte, ungesättigte oder aromatische, carbocyclische oder heterocyclische Ringe trägt;
oder
- Z²: Wasserstoff, Hydroxy, Amino, Phenyl, (C₁-C₄)-Alkylen-phenyl, C₅-C₃₀₋Cycloalkyl, C₂-C₃₀-Alkenyl, oder verzweigtes oder unverzweigtes C₁-C₃₀₋Alkyl ist, wobei der Phenylring, die (C₁-C₄)-Alkylen-phenyl-Gruppe, die C₅-C₃₀-Cycloalkylgruppe, die C₂-C₃₀-Alkenylgruppe und die C₁-C₃₀₋Alkylgruppe durch ein oder mehrere, z.B. 1, 2, 3 oder 4, Substituenten aus der Gruppe Cl, Br, CN, NH₂, OH, C₆H₅, mit 1, 2 oder 3 C₁-C₂₀-Alkoxyresten substituiertes C₆H₅, Carbamoyl, Carboxy, C₂-C₄-Acyl, C₁-C₈-Alkyl, NR²R³, wobei R² und R³ die oben genannte Bedeutung haben, und C₁-C₄-Alkoxy, z.B. Methoxy oder Ethoxy, substituiert sein können, oder die Alkylgruppe und die Alkenylgruppe perfluoriert oder teilfluoriert sein können;
- G: eine bivalente Gruppe -CO-, -SO₂-, -SO₂N(R⁶)-R⁵-CO-, -SO₂N(R⁶)-R⁵-SO₂-, -CON(R⁶)-R⁵-CO- oder -CON(R⁶)-R⁵-SO₂- bedeutet, und R⁵ einen bivalenten verzweigten oder unverzweigten, gesättigten oder ungesättigten, aliphatischen Kohlenwasserstoffrest mit 1 bis 20 C-Atomen, oder einen C₅-C₇-Cycloalkylenrest, oder einen bivalenten aromatischen Rest mit 1, 2 oder 3, vorzugsweise 1 oder 2 aromatischen Ringen, wobei die Ringe kondensiert vorliegen oder durch eine Bindung verknüpft sein können, wie beispielsweise ein Phenyl-, Biphenyl- oder Naphthyl-Rest, oder einen heterocyclischen Rest mit 1, 2 oder 3 Ringen, der 1, 2, 3 oder 4 Heteroatome aus der Gruppe O, N und S enthält, oder eine Kombination davon bedeutet; wobei die vorstehend genannten Kohlenwasserstoff-, Cycloalkylen-, Aromaten- und Heteroaromaten-Reste durch 1, 2, 3 oder 4 Substituenten aus der Gruppe OH, CN, F, Cl, Br, NO₂, CF₃, C₁-C₆-Alkoxy, S-C₁-C₆-Alkyl, NHCONH₂, NHC(NH)NH₂, NHCO-C₁-C₆-Alkyl, C₁-C₆-Alkyl, COOR²⁰, CONR²⁰R²¹, NR²⁰R²¹, SO₃R²⁰ oder SO₂-NR²⁰R²¹ substituiert sein können, wobei R²⁰ und R²¹ gleich oder verschieden sind und Wasserstoff, Phenyl oder C₁-C₆-Alkyl bedeuten, und R⁶ Wasserstoff, R⁵-H, R⁵-COO⁻E⁺ oder R⁵-SO₃⁻E⁺ bedeutet; und
- E⁺: H⁺;
das Äquivalent M^{s+}/s eines Metallkations M^{s+}, vorzugsweise aus der 1. bis 5. Hauptgruppe oder aus der 1. oder 2. oder der 4. bis 8. Nebengruppe des Periodensystems der chemischen Elemente bezeichnet, wobei s eine der Zahlen 1, 2 oder 3 ist, wie beispielsweise Li¹⁺, Na¹⁺, K¹⁺, Mg²⁺, Ca²⁺, sr²⁺, Ba²⁺, Mn²⁺, Cu²⁺, Ni²⁺, Co²⁺, Zn²⁺, Fe²⁺, Al³⁺, Cr³⁺ oder Fe³⁺; ein Phosphoniumion; oder ein unsubstituiertes oder substituiertes Ammoniumion bedeutet.

Als substituiertes Ammoniumion kommt beispielsweise ein Ion der Formel N⁺R⁹R¹⁰R¹¹R¹² in betracht, wobei die Substituenten R⁹, R¹⁰, R¹¹ und R¹² gleich oder verschieden sind und die Bedeutung von Z² haben;
oder wobei die Substituenten R⁹ und R¹⁰ zusammen mit dem N-Atom des Ammoniumions ein fünf- bis siebengliedriges gesättigtes oder ungesättigtes Ringsystem, das ggf. noch weitere Heteroatome aus der Gruppe O, S und N oder Carbonylgruppen enthält, bilden können, und das gegebenenfalls 1 oder 2 ankondensierte gesättigte, ungesättigte oder aromatische, carbocyclische oder heterocyclische Ringe trägt; wobei das Ringsystem und die ggf. ankondensierten Ringe durch 1, 2 oder 3 Reste aus der Gruppe OH, NH₂, Phenyl, CN, Cl, Br, C₁-C₄-Alkyl, C₁-C₄-Alkoxy, C₂-C₄-Acyl und Carbamoyl substituiert sein können, beispielsweise vom Pyrrolidon-, Imidazolidin-, Hexamethylenimin-, Piperidin-, Piperazin- oder Morpholin-Typ;
oder wobei die Substituenten R⁹, R¹⁰ und R¹¹ zusammen mit dem N-Atom des Ammoniumions ein fünf- bis siebengliedriges aromatisches Ringsystem, das ggf. noch weitere Heteroatome aus der Gruppe O, S und N oder Carbonylgruppen enthält, bilden können, und das gegebenenfalls 1 oder 2 ankondensierte gesättigte, ungesättigte oder aromatische, carbocyclische oder heterocyclische Ringe trägt, wobei das Ringsystem und die ggf. ankondensierten Ringe durch 1, 2 oder 3 Reste aus der Gruppe OH, NH₂, Phenyl, CN, Cl, Br, C₁-C₄-Alkyl, C₁-C₄₋Alkoxy, C₂-C₄-Acyl und Carbamoyl substituiert sein können, beispielsweise vom Pyrrol-, Imidazol-, Pyridin-, Picolin-, Pyrazin-, Chinolin- oder Isochinolin-Typ.

Als substituiertes Ammonium kommt ferner das 1/p Äquivalent eines Ammoniumions der Formel (Ic) in Betracht 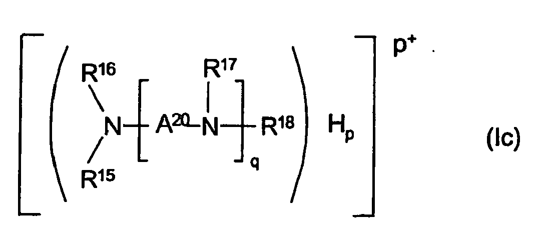 worin
- R¹⁵, R¹⁶ , R¹⁷ und R¹⁸: unabhängig voneinander Wasserstoff oder eine (Poly)alkylenoxygruppe der Formel (Id) bedeuten;

-[(CH(R⁸⁰)-)ⱼO]ₖR⁸¹ (Id)

in der j die Zahl 2 oder 3 ist, k eine Zahl von 1 bis 100 ist, die Reste R⁸⁰ Wasserstoff, C₁-C₄-Alkyl oder, sofern k > 1 ist, eine Kombination davon bedeuten können und der Rest R⁸¹ Wasserstoff, C₁-C₄-Alkyl oder die Gruppe -(CH(R⁸²)-)ᵢNH₂ bedeutet, i die Zahl 2 oder 3 bedeutet und die Reste R⁸² Wasserstoff, C₁-C₄-Alkyl oder eine Kombination davon bedeuten;
- q: eine Zahl von 1 bis 10, vorzugsweise 1, 2, 3, 4 oder 5 ist;
- p: eine Zahl von 1 bis 5, wobei p ≤q+1 ist;
- A²⁰: einen verzweigten oder unverzweigten C₂-C₆-Alkylenrest bedeutet; oder worin A²⁰, wenn q > 1 ist, auch eine Kombination von verzweigten oder unverzweigten C₂-C₆-Alkylenresten sein kann.

Als substituiertes Ammoniumion kommt ferner ein sich von einer Polyaminoamido- oder Polyaminoverbindung ableitendes Ammoniumion in Betracht, das einen solchen Anteil an reaktionsfähigen Polyaminogruppen hat, dass der Aminindex zwischen 100 und 800 mg KOH pro g der Polyaminoamido- oder Polyaminoverbindung beträgt, wie es beispielsweise in der DE-A-27 39 775 offenbart wird.

Als substituiertes Ammoniumion kommt ferner ein Kation eines polymeren Ammoniumsalzes mit einem mittleren Molekulargewicht von 500 bis 2.500.000, das in Wasser oder in C₁-C₄-Alkohol löslich ist, wie es beispielsweise in der DE-A-42 14 868 offenbart wird, in Betracht.

Als substituiertes Ammoniumion kommt ferner das 1/r Äquivalent eines von einem Diamin abgeleiteten Ammoniumions der Formel (III) in Betracht 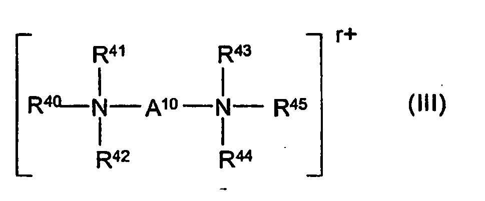 wie es beispielsweise in der WO 01/14479 offenbart wird,
und worin
- R⁴⁰: C₆-C₃₀-Alkyl, bevorzugt lineares C₈-C₂₀-Alkyl, oder C₆-C₃₀-Alkenyl, bevorzugt linear, bedeutet,
- R⁴¹: eine freie Valenz, Wasserstoff, C₁-C₃₀-Alkyl, C₂-C₃₀-Alkenyl, C₃-C₃₀₋Cycloalkyl, C₆-C₁₄-Aryl oder C₇-C₃₈-Aralkyl bedeutet,
- R⁴², R⁴³ und R⁴⁵: gleich oder verschieden sind und C₁-C₆-Alkyl, bevorzugt Methyl, C₃-C₃₀-Cycloalkyl, C₆-C₁₄-Aryl oder C₇-C₃₈-Aralkyl bedeutet,
- R⁴⁴: eine freie Valenz, Wasserstoff, C₁-C₆-Alkyl, bevorzugt Methyl, C₃-C₃₀₋Cycloalkyl, C₆-C₁₄-Aryl oder C₇-C₃₈-Aralkyl bedeutet,
mit der Maßgabe, dass R⁴¹ und R⁴⁴ nicht gleichzeitig eine freie Valenz bedeuten,
- r: die Zahl 2, oder für den Fall, dass R⁴¹ oder R⁴⁴ eine freie Valenz bedeutet, die Zahl 1 bedeutet,
- A¹⁰: C₁-C₁₂-Alkylen oder C₂-C₁₄-Alkenylen bedeutet, bevorzugt 2, 3 oder 4 C-Atome enthält, insbesondere 3;
oder
- R⁴¹ und R⁴³: zusammen mit den zwei Stickstoffatomen, an die sie geknüpft sind, und mit A¹⁰ einen Ring bilden, bevorzugt Piperazinyl;
und/oder
- R⁴⁴ und R⁴⁵: zusammen mit dem Stickstoffatom, an das sie geknüpft sind, einen Ring bilden, bevorzugt Piperidinyl, Morpholinyl, Piperazinyl oder N-(C₁-C₆₋Alkyl)-piperazinyl.

Die in der Definition vor R⁴⁰ bis R⁴⁵ genannten Reste sind bevorzugt unsubstituiert oder sind mit Substituenten aus der Gruppe OH, C₁-C₆-Alkyl, bevorzugt Methyl, C₁-C₆-Alkoxy, CN und Halogen, besonders Chlor oder Brom, substituiert. Aryl bedeutet bevorzugt Phenyl, Aralkyl bevorzugt Benzyl oder 2-Phenylethyl und Cycloalkyl bevorzugt Cyclopentyl oder Cyclohexyl.
Bevorzugt sind solche Ionen der Formel (III), in der R⁴¹ und R⁴⁴ Wasserstoff und R⁴², R⁴³ und R⁴⁵-Methyl bedeuten, besonders bevorzugt solche Ionen der Formel (III), in der R⁴¹ bis R⁴⁵ Methyl bedeuten. Weiterhin bevorzugt sind solche Ionen der Formel (III), die sich von Aminen natürlicher Öle und Fette, wie Kokosöl, Maisöl, Getreideöl, Fisch- oder Walfischtran, besonders aus Talgfett, ableiten.

Von besonderem Interesse sind Pigmentdispergatoren der Formel (I), worin T einen unchlorierten Kupferphthalocyaninrest darstellt.

Von Interesse sind Pigmentdispergatoren der Formel (I) mit m gleich 1, 2 oder 3 und
n = 0, außerdem Pigmentdispergatoren der Formel (I) mit m gleich 0, n gleich 1, 2 oder 3 und worin G -SO₂- bedeutet.

Von Interesse sind weiterhin Pigmentdispergatoren der Formel (I), worin
- R² und R³: gleich oder verschieden sind und Wasserstoff, eine C₁-C₆₋Alkylgruppe,
insbesondere Methyl, Ethyl, Propyl, Butyl oder Cyclohexyl, oder eine durch 1 bis 2 Substituenten aus der Gruppe Hydroxy, Acetyl, Methoxy, Ethoxy, Chlor und Brom substituierte C₁-C₆-Alkylgruppe darstellen. Von Interesse sind weiterhin Pigmentdispergatoren der Formel (I), worin -NR²- und
- R³: zusammen einen Imidazolyl-, Imidazolinyl-, Piperidinyl-, Morpholinyl-, Pipecolinyl-, Pyrrolyl-, Pyrrolidinyl-, Pyrazolyl-, Pyrrolidinonyl-, Indolyl-, Hexamethyleniminyl- oder Piperazinyl-Ring bilden.

Von Interesse sind weiterhin Pigmentdispergatoren der Formel (I), worin X ein C₂-C₄-Alkylenrest oder Cyclohexylen bedeutet.

Von besonderem Interesse sind Pigmentdispergatoren der Formel (I), worin Z² die Bedeutung -[(CH₂)₃-NH]₂-H, -(CH₂-CH₂-NH)₂H,
-(CH₂)₃-NH-(CH₂)₂-NH-(CH₂)₃-NH₂, 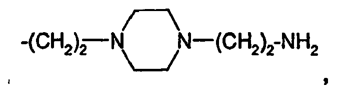 -(CH₂)₃-N(CH₃)-(CH₂)₃-NH₂, -(CH₂)₃-O-(CH₂)₂-O-(CH₂)₃-NH₂,
-(CH₂)₃-O-(CH₂)₃-O-(CH₂)₃-NH₂, -(CH₂)₂-NH-(CH₂)₃-NH₂, -(CH₂)₃-NH-(CH₂)₂-NH₂,
-(CH₂-CH₂-NH)₃-H, -(CH₂-CH₂-NH)₄-H, -(CH₂-CH₂-NH)₅-H,
-(CH₂)₃-O-(CH₂)₂-O-(CH₂)₂-O-(CH₂)₃-NH₂, -(CH₂)₃-O-(CH₂)₄-O-(CH₂)₃-NH₂, 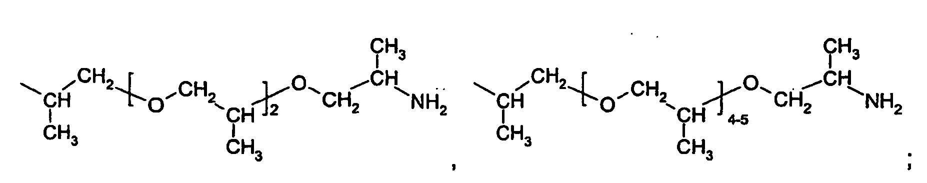 -(CH₂)₂-OH, -(CH₂)₃-OH, -CH₂-CH(CH₃)-OH, -CH(CH₂-CH₃)CH₂-OH, - CH(CH₂OH)₂,
-(CH₂)₂-O-(CH₂)₂-OH oder -(CH₂)₃-O-(CH₂)₂-O-(CH₂)₂-OH;
-(CH₂)₂-NH₂, -(CH₂)₃-NH₂, -CH₂-CH(CH₃)-NH₂,
-CH₂-C(CH₃)₂-CH₂-NH₂, 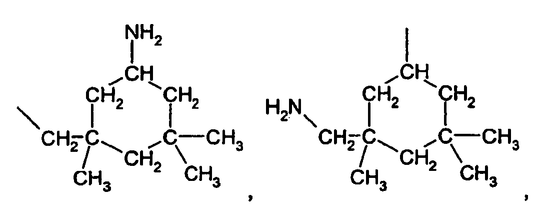 -(CH₂)₂-NH-CH₃, -(CH₂)₂-N(CH₃)₂, -(CH₂)₂-NH-CH₂-CH₃, -(CH₂)₂-N(CH₂-CH₃)₂,
-(CH₂)₃-NH-CH₃, -(CH₂)₃-N(CH₃)₂, -(CH₂)₃-NH-CH₂-CH₃ oder -(CH₂)₃-N(CH₂-CH₃)₂ hat.

Von Interesse sind weiterhin Pigmentdispergatoren der Formel (I), worin Z² Wasserstoff, Amino, C₁-C₈-Alkyl, Phenyl, Benzyl oder ein durch 1 bis 2 Substituenten aus der Gruppe -NR²R³, Hydroxy, Acetyl, Methoxy und Ethoxy substituiertes C₂-C₈-Alkyl, Phenyl oder Benzyl, besonders bevorzugt Wasserstoff, Dimethylaminophenyl, Diethylaminophenyl, Methyl, Ethyl, Propyl, Butyl, Cyclohexyl, Benzyl, Hydroxyethyl, Hydroxypropyl oder Methoxypropyl ist.

Von besonderen Interesse sind weiterhin Pigmentdispergatoren der Formel (I), bei denen E⁺ die Bedeutung H⁺ hat;
oder wobei im Falle des Äquivalents M^{s+}/s das Metallkation M^{s+} die Bedeutung Na⁺, Ca²⁺, Mg²⁺, Sr²⁺, Ba²⁺, Mn²⁺ oder Al³⁺ hat;
oder wobei E⁺ ein protoniertes tertiäres Amin ist, das aus Ölen und Fetten wie Talg, Kokosöl, Maisöl, Getreideöl, Fisch- oder Walfischtran gewonnen wurde, und beispielsweise Triisooctylamin, Dimethyltalgfettamin, Dimethylsojaamin, Dimethyloctadecylamin oder hydriertes Monomethyl-di(talgfettamin) oder ein alkoxyliertes Derivat eines Fettamins ist, beispielsweise Talgalkyldi(2-hydroxyethyl)amin, Polyoxyethylen(5)talgamin, Polyoxyethylen(8)oleylamin, N,N',N'-Tris(2-hydroxyethyl)-N-talg-1,3-diaminopropan, N,N',N'-Polyoxyethylen(12)-N-talg-1,3-diaminopropan;
oder wobei E⁺ ein quaternäres Ammoniumion ist, das sich vorzugsweise von den aus obigen Ölen und Fetten gewonnen Aminen oder alkoxylierten Fettaminen ableitet, beispielsweise durch Methylierung oder durch Umsetzung mit Benzylchorid, und beispielsweise Stearylbenzyl- oder Cocosalkyl-dimethylbenzylammonium oder
-2,4-dichlorbenzylammonium, Hexadecyl-, Stearyl-, Dodecyl- oder Cetyltrimethylammonium, Di-hydriertes Talgfettalkyl-, Dicocosalkyl- oder Distearyldimethylammonium, Oleyl- oder Kokos-di(2-hydroxyethyl)methylammonium, hydriertes Polyoxyethylen(15)-talgmethylammonium, N,N,N',N',N'-Pentamethyl-N-talg-1,3-propandiammonium, permethyliertes N-Stearyldiethylentriamin, permethyliertes N-Stearyltriethylentetramin, N-(3-Dodecyloxy-2-hydroxypropyl)octadecyldimethylammonium, Methyl-tri(2-octyl)ammonium, N,N-Di-(beta-stearoylethyl)-N,N-dimethylammonium, Laurylpyridinium, 2-Hydroxy-[5-chlor-, 5-isooctyl-, 5-t-butyl- oder n-nonyl-]1,3-xylylen-bispyridinium, 2-Methoxy-5-isooctyl-1,3-xylylen-bispyridinium, 2-Hydroxy-5-isooctyl-1,3-xylylen-bischinolinium, 2-Hydroxy-5-isooctyl-1,3-xylylenbisisochinolinium oder Behenyltrimethylammonium ist;
oder wobei E⁺ ein Phosphoniumion wie Hexadecyltributylphosphonium, Ethyltrioctylphosphonium oder Tetrabutylphosphonium ist;
wobei die ursprünglichen Anionen der eingesetzten quaternären Ammoniumverbindungen oder Phosphoniumverbindungen beispielsweise Halogenid, Sulfat, Alkoxysulfat, Alkoxyphosphat gewesen sein können.

Von besonderem Interesse sind weiterhin Pigmentdispergatoren der Formel (I), bei denen das dem Rest Z¹ oder dem Ammoniumion N⁺R⁹R¹⁰R¹¹R¹² zugrunde liegende Amin ein primäres oder sekundäres Amin, insbesondere Mischungen primärer und sekundärer Amine mit gegebenenfalls gemischten Kohlenwasserstoffresten natürlich vorkommender Öle und Fette wie Talg, Kokosöl, Maisöl, Getreideöl, Fisch- oder Walfischtran oder Holzharz, ist; konkret zu nennen sind beispielsweise Ammoniak, Methylamin, Triethylamin, Butylamine, Dibutylamine, Tributylamin, Hexylamine, Dodecylamin, Stearylamin, Diethylamin, Di-n-butylamin, Ethylendiamin, Anilin, N-Methylanilin, Benzylamin, Phenylethylamin, Cyclohexylaminoethylamin, 2-Cyclohexyl-aminopropylamin, 3-Stearylaminopropylamin, 2-Dimethylaminoethylamin, 2-Diethylaminoethylamin, 2-Dipropylaminoethylamin, 2-Dibutylaminoethylamin, 3-Dimethylaminopropylamin, 3-Diethylaminopropylamin, 3-Cyclohexylaminopropylamin, N-Methylpiperazin, N-Aminopropylmorpholin, N-Aminoethylpiperidin, N-Aminoethylpyrrolidin, N-Aminopropylpipecolin, 4-Diethylamino-1-methylbutylamin-(1), Lauryl-, Kokos- oder Talgfettamin, Lauryl-, Oleyl- oder Talgfettpropylendiamin, Talgfettdipropylentriamin, Talgfetttripropylentetraamin, 1,1,3,3-Tetramethylbutylamin, primäre Amine mit tertiären C₁₆-C₂₂-Alkylgruppen, N,N-Bis-aminopropyl-talgfettamin, 2-Ethylhexoxypropylamin oder Dehydroabietylamin.

Im erfindungsgemäßen Verfahren werden gewöhnlicherweise mehrere verschiedene dieser Pigmentdispergatoren in einer Gesamtmenge von 0,1 bis 25 Gew.-%, vorzugsweise 0,5 bis 20 Gew.-%, insbesondere 1 bis 17,5 Gew.-%, bezogen auf das Gewicht des Phthalocyanin-Rohpigments eingesetzt.

Die Phthalocyaninsulfon- oder carbonsäuresalze können in situ hergestellt werden, beispielsweise durch Zugabe der Phthalocyaninsäuren und der das salzbildendende Gegenion enthaltenden Substanz zu einer Suspension des Präpigments. Sie können auch separat hergestellt werden, beispielsweise durch Vereinigen der zugrunde liegenden Phthalocyaninsulfon- oder carbonsäure mit der das salzbildendende Gegenion enthaltenden Substanz, in wässriger oder organischem Lösemittel, gegebenenfalls mit Isolation. Sie können auch bereits während der Herstellung der zugrundeliegenden sauren Pigmentdispergatoren gebildet werden. Die Zugabe der freien Säuren der Pigmentdispergatoren und der die salzbildenden Gegenionen enthaltenden Substanzen kann auch zu unterschiedlichen Zeitpunkten im Verfahren erfolgen. Die Bildung des gewünschten Salzes kann auch durch eine Metathese stattfinden, beispielsweise aus Alkalisalzen der Säure des Pigmentdispergators und einem Amin oder einem Ammoniumsalz.

Die erfindungsgemäß eingesetzten Pigmentdispergatoren können an irgendeiner Stufe des Verfahrens eingesetzt werden mit der Maßgabe, dass die Zugabe vor dem Finish geschieht. Werden sie erst während des Finishs zugesetzt, müssen sie mindestens 5 Minuten während des Finishs anwesend sein. Sie können daher auch bereits zur Synthese des Phthalocyanin-Rohpigments zugesetzt oder bei der Synthese des Rohpigments gleichzeitig gebildet werden, beispielsweise durch Zugabe von Trimellithsäure. Auch eine Zugabe vor der Mahlung, der Salzknetung, dem Acid Pasting oder Acid Swelling ist denkbar. Bevorzugt werden sie unmittelbar vor dem Finish zugesetzt.
Nach dem Finish kann der pH wieder gesenkt werden. Beispielsweise kann die Bildung von Salzen bei einem sauren pH, beispielsweise bei pH 3 bis 6 begünstigt sein.

Bei organischen Lösemitteln, die durch Wasserdampfdestillation von der wässrigen Phase getrennt werden können, bietet es sich an, diese auf diese Weise vor Isolation der Pigmentzubereitung zu entfernen, besonders wenn eine Wiedergewinnung des eingesetzten Lösemittels gewünscht ist.

Die nach dem erfindungsgemäßen Verfahren hergestellten Pigmentzubereitungen können mit den üblichen Methoden isoliert werden, beispielsweise durch Filtrieren, Dekantieren oder Zentrifugieren. Lösemittel können auch durch Waschen entfernt werden. Die Pigmentzubereitungen können als vorzugsweise wässrige Presskuchen zum Einsatz kommen, in der Regel handelt es sich jedoch um getrocknete, feste Systeme von rieselfähiger, pulverförmiger Beschaffenheit oder um Granulate.

Bei der Herstellung der Pigmentzubereitungen können Hilfsmittel eingesetzt werden, wie beispielsweise weitere Tenside, weitere nichtpigmentäre und pigmentäre Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon.

Die Hilfsmittel können an beliebiger Stelle des Verfahrens zugegeben werden, beispielsweise bereits vor der Feinverteilung, vor dem Finish oder erst nach dem Finish oder auch durch Mischen in trockenem Zustand.

Als Tenside kommen anionische oder anionaktive, kationische oder kationaktive und nichtionische oder amphotere Substanzen oder Mischungen dieser Mittel in Betracht.
Als anionaktive Substanzen kommen beispielsweise Fettsäuretauride, FettsäureN-methyltauride, Fettsäureisethionate, Alkylphenylsulfonate, beispielsweise Dodecylbenzolsulfonsäure, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; die Salze dieser anionischen Substanzen und Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Bevorzugt sind Harzseifen, d.h. Alkalisalze von Harzsäuren.
Als kationaktive Substanzen kommen beispielsweise quaternäre Ammoniumsalze, Fettaminoxalkylate, Polyoxyalkylenamine, oxalkylierte Polyamine, Fettaminpolyglykolether, primäre, sekundäre oder tertiäre Amine, beispielsweise Alkyl-, Cycloalkyl oder cyclisierte Alkylamine, insbesondere Fettamine, von Fettaminen oder Fettalkoholen abgeleitete Di- und Polyamine und deren Oxalkylate, von Fettsäuren abgeleitete Imidazoline, Polyaminoamido- oder Polyaminoverbindungen oder -harze mit einem Aminindex zwischen 100 und 800 mg KOH pro g der Polyaminoamido- oder Polyaminoverbindung, und Salze dieser kationenaktiven Substanzen, wie beispielsweise Acetate oder Chloride, in Betracht.
Als nichtionogene und amphotere Substanzen kommen beispielsweise Fettamincarboxyglycinate, Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkohol-alkylenoxid-Addukte und Alkylphenolpolyglykolether in Betracht.

Es ist auch möglich, den Finish in einer Emulsion aus Wasser, Tensid und organischem Lösemittel durchzuführen.

Mit nichtpigmentären Dispergiermitteln sind Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Blockcopolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse® , Avecia; Disperbyk® , Byk-Chemie, Efka® , Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermitteln sind Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäure-, Sulfonamid- oder Sulfosäureestergruppen haltige Pigmentdispergatoren, Ether- oder Thioethergruppen haltige Pigmentdispergatoren, oder Carbonsäure-, Carbonsäureester- oder Carbonamidgruppen haltige Pigmentdispergatoren.

Als weitere Pigmentdispergatoren sind insbesondere solche auf Basis von Kupferphthalocyanin der allgemeinen Formel (II) gemeint, 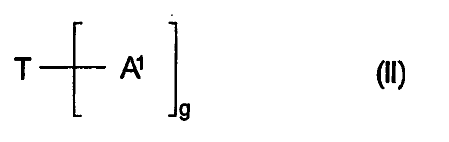 in welcher
- T: die vorstehend genannte Bedeutung hat,
- g: eine Zahl von 1 bis 4 bedeutet, und
- A¹: eine Gruppe der Formel (IIa) 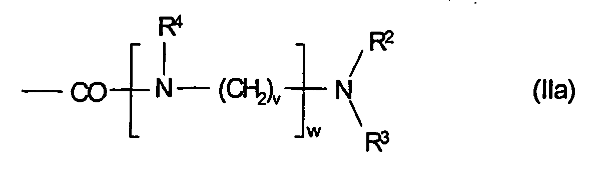
darstellt, worin
- R² und R³: die vorstehend genannten Bedeutungen haben, vorzugsweise Wasserstoff oder C₁-C₄-Alkyl,
- R⁴: Wasserstoff, C₁-C₄-Alkyl, vorzugsweise Wasserstoff oder Methyl,
- v: eine Zahl vom 1 bis 6, vorzugsweise 2 oder 3,
- w: eine Zahl 0 oder 1, vorzugsweise 1, bedeutet;
oder in welcher
- T: die vorstehend genannte Bedeutung hat,
- g: eine Zahl von 1 bis 6 bedeutet, vorzugsweise 2 bis 4, und
- A¹: eine Aminomethylengruppe der Formel (IIb) 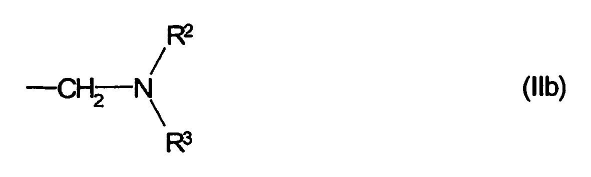
darstellt, worin
- R² und R³: die vorstehend genannten Bedeutungen haben, vorzugsweise Wasserstoff oder C₁-C₄-Alkyl,
oder in welcher
- T: die vorstehend genannte Bedeutung hat,
- g: eine Zahl von 1 bis 4 bedeutet, und
- A¹: eine Gruppe der Formel (IIc) 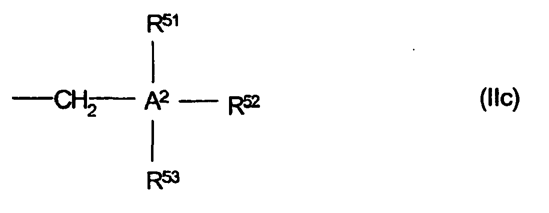
darstellt, worin
- A²: einen fünf-oder sechsgliedrigen aromatischen Ring oder einen kondensierten aromatischen Heterocyclus darstellt, welcher 1 bis 3 gleiche oder unterschiedliche Heteroatome aus der Gruppe Stickstoff, Sauerstoff und Schwefel enthält und der Heterocyclus über ein Kohlenstoffatom an die Methylengruppe gebunden ist,
- R⁵¹ und R⁵²: gleich oder verschieden sind und ein Wasserstoffatom, eine C₁-C₄-Alkyl-, eine C₁-C₄-Hydroxyalkyl- oder eine C₂-C₄-Alkyenylgruppe, vorzugsweise Wasserstoff, Methyl, Ethyl oder Hydroxyethyl, oder eine Arylgruppe bedeuten, wobei Aryl für unsubstituiertes oder für mit 1 bis 4 Resten aus der Gruppe C₁-C₆-Alkyl, Halogen, vorzugsweise F, Cl oder Br, C₁-C₆-Alkoxy, Cyan, CONH₂ und COOR⁵⁴, wobei R⁵⁴ Wasserstoff oder C₁-C₆-Alkyl bedeutet, substituiertes Phenyl steht,
- R⁵¹ und R⁵²: gemeinsam auch einen aliphatischen oder aromatischen Ring, vorzugsweise einen Phenylring, bilden können,
- R⁵³: ein Wasserstoffatom, eine C₁-C₄-Alkyl-, eine C₁-C₄-Hydroxyalkyl- oder eine C₂-C₄-Alkyenylgruppe bedeutet;
oder in welcher
- T: die vorstehend genannte Bedeutung hat,
- g: eine Zahl von 1 bis 4 bedeutet, und
- A¹: eine Gruppe der Formel (IId) 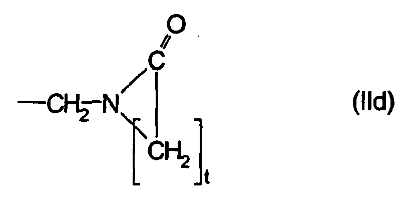
darstellt, worin
- t: eine Zahl von 3 bis 6, vorzugsweise 3 bis 5 ist;
oder in welcher
- T: die vorstehend genannte Bedeutung hat und gegebenenfalls zusätzlich durch
1, 2 oder 3 Sulfonsäuregruppen substituiert sein kann,
- g: eine Zahl von 1 bis 4 bedeutet, vorzugsweise 1, 2 oder 3, und
- A¹: eine Phthalimidomethylengruppe der Formel (Ile) 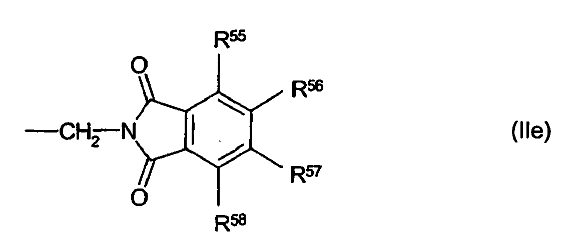
darstellt, worin
- R⁵⁵, R⁵⁷ und R⁵⁸: gleich oder verschieden sind und Wasserstoff, Fluor, Chlor oder Brom, vorzugsweise Wasserstoff, bedeuten
- R⁵⁶: Wasserstoff, Nitro, C₁-C₅-Alkyl, C₁-C₆-Alkoxy, Benzoylamino, Fluor, Chlor oder Brom, vorzugsweise Wasserstoff, bedeutet;
oder in welcher
- T: die vorstehend genannte Bedeutung hat,
- g: eine Zahl von 1 bis 4 bedeutet, und
- A¹: eine o-Sulfobenzöesäureimidomethylengruppe der Formel (IIf) 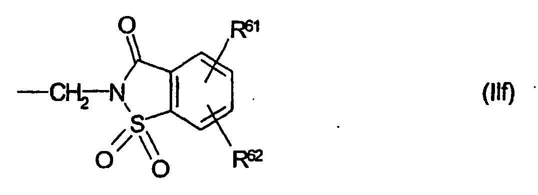
darstellt, worin
- R⁶¹ und R⁶²: gleich oder verschieden sind und Wasserstoff, Chlor, Brom, C₁-C₄-Alkyl, C₁-C₄-Alkoxy oder Nitro, vorzugsweise Wasserstoff, bedeuten;
oder in welcher
- T: die vorstehend genannte Bedeutung hat,
- g: eine Zahl von 1 bis 4 bedeutet, und
- A¹: eine Gruppe der Formel (IIg) 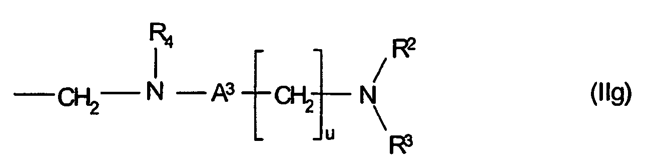
darstellt, worin
- A³: eine Carbonyl- oder Sulfonylgruppe, vorzugsweise eine Carbonylgruppe,
ist,
- R², R³: die vorstehend genannte Bedeutung haben
- R⁴: Wasserstoff, C₁-C₄-Alkyl, vorzugsweise Wasserstoff und Methyl;
- u: die Zahl 1 oder 2, vorzugsweise 1, ist.

Besonders bevorzugt sind Pigmentdispergatoren der allgemeinen Formel (II), worin A¹ eine Phthalimidomethylengruppe der Formel (Ile), eine Imidazolylmethylengruppe der Formel (Ilc) oder eine Aminomethylen-, eine N-Methylaminomethylen-, eine N,N-Dimethylaminomethylen-, eine N-Ethylaminomethylen oder eine N,N-Diethylaminomethylengruppe der Formel (IIb) bedeutet.

Anionische Gruppen der als Hilfsmittel eingesetzten nichtpigmentären- und pigmentären Dispergatoren, Tenside oder Harze können auch verlackt werden, beispielsweise durch Ca-, Mg-, Ba-, Sr-, Mn- oder Al-Ionen oder durch quaternäre Ammoniumionen. Dies kann vor oder nach dem Finish geschehen.

Mit Füllstoffe bzw. Extender sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid. Dabei hat sich die Zugabe besonders vor der Mahlung des Rohpigments oder vor der Pulverisierung der getrockneten Pigmentzubereitung bewährt.

Bewährt hat sich auch der Zusatz von geringen Mengen an Zusatzstoffen aus der Gruppe Phthalimid, Phthalsäureanhydrid, hydriertes Holzharz und Glycerylmonooleat bei der Mahlung.

Nach dem Finish kann die Suspension noch einer mechanischen oder thermischen Behandlung unterzogen werden, beispielsweise eine Dispergierung mittels einer Perlmühle oder, bevorzugt nach Entfernen des Lösemittels mittels Wasserdampfdestillation, die Zugabe von weiteren Hilfsmitteln oder das erwähnte Verlacken von anionischen Gruppen bei erhöhter Temperatur.

Die nach dem erfindungsgemäßen Verfahren hergestellten Pigmentzubereitungen lassen sich zum Pigmentieren von hochmolekularen organischen Materialien natürlicher oder synthetischer Herkunft einsetzen, beispielsweise von Kunststoffen, Harzen, Lacken, Anstrichfarben oder elektrophotographischen Tonern und Entwicklern, sowie von Tinten und Druckfarben.

Hochmolekulare organische Materialien, die mit den nach dem erfindungsgemäßen Verfahren hergestellten Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.
Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die nach dem erfindungsgemäßen Verfahren hergestellten Pigmentzubereitungen als Blend oder in Form von Präparationen oder Dispersionen zu benutzen. Bezogen auf das zu -pigmentierende, hochmolekulare organische Material setzt man die nach dem erfindungsgemäßen Verfahren hergestellten Pigmentzubereitungen in einer Menge von 0,05 bis 30 Gew.-%, vorzugsweise 0,1 bis 15 Gew.-%, ein.

Die nach dem erfindungsgemäßen Verfahren hergestellten Pigmentzubereitungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner.
Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die nach dem erfindungsgemäßen Verfahren hergestellten Pigmentzubereitungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die nach dem erfindungsgemäßen Verfahren hergestellten - Pigmentzubereitungen als Farbmittel in Ink-Jet Tinten auf wässriger und nichtwässriger Basis sowie in solchen Tinten, die nach dem Hot-melt-Verfahren arbeiten, geeignet.
Ink-Jet-Tinten enthalten im allgemeinen insgesamt 0,5 bis 15 Gew.-%, vorzugsweise 1,5 bis 8 Gew.-%, (trocken gerechnet) einer oder mehrerer der nach dem erfindungsgemäßen Verfahren hergestellten Pigmentzubereitungen.

Mikroemulsionstinten basieren auf organischen Lösemitteln, Wasser und ggf. einer zusätzlichen hydrotropen Substanz (Grenzflächenvermittler).
Mikroemulsionstinten enthalten im allgemeinen 0,5 bis 15 Gew.-%, vorzugsweise 1,5 bis 8 Gew.-%, einer oder mehrerer der nach dem erfindungsgemäßen Verfahren hergestellten Pigmentzubereitungen, 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 15 Gew.-% einer oder mehrerer der nach dem erfindungsgemäßen Verfahren hergestellten Pigmentzubereitungen, 85 bis 99,5 Gew.-% organisches Lösungsmittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im wesentlichen aus 20 bis 90 Gew.-% Wachs und 1 bis 10 Gew.-% einer oder mehrerer der nach dem erfindungsgemäßen Verfahren hergestellten Pigmentzubereitungen. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein.

Weiterhin sind die nach dem erfindungsgemäßen Verfahren hergestellten Pigmentzubereitungen auch als Farbmittel für Farbfilter sowohl für die additive wie subtraktive Farberzeugung sowie für elektronische Tinten "(electronic inks") geeignet.

Das erfindungsgemäße Verfahren erlaubt das Herstellen einer Vielzahl von hochwertigen Pigmentzubereitungen auf Basis unterschiedlicher Phthalocyanine bzw. unterschiedlicher Kristallmodifikationen durch die gezielte Kombination der Rohstoffe, Verfahrensschritte und Verfahrensparameter. Besonders eignet es sich zum Herstellen von Pigmentzubereitungen mit Kupferphthalocyaninpigmenten der beta-Phase und von Pigmentzubereitungen auf Basis von Tri- und Tetrachlorkupferphthalocyaninen.

Die nach dem erfindungsgemäßen Verfahren hergestellten Pigmentzubereitungen zeichnen sich aus durch ihre hervorragenden coloristischen und rheologischen Eigenschaften, insbesondere Flockungsstabilität, Dispergierbarkeit, Rheologie, Glanz, Transparenz und Farbstärke. Sie sind in vielen Anwendungsmedien leicht und bis zu hohen Feinheiten dispergierbar. Solche Pigmentdispersionen zeigen hervorragende rheologische Eigenschaften selbst bei hoher Pigmentierung der Lack- und Druckfarbenkonzentrate. Mit ihnen lassen sich Lackierungen und Drucke von hoher Farbstärke, hohem Glanz, hoher Transparenz und mit ausgezeichneten Echtheitseigenschaften erzielen.

Zur Beurteilung der Eigenschaften der Pigmente auf dem Kunststoffgebiet wurde aus der Vielzahl der bekannten Kunststoffe Weichpolyvinylchlorid (PVC) ausgewählt. Die Bestimmung der Ausblutechtheit erfolgte nach DIN 53775.

Zur Beurteilung der Eigenschaften der Pigmente auf dem Lacksektor in wasserfreien, lösemittelbasierenden Lacksystemen wurden aus der Vielzahl der bekannten Lacke ein Alkyd-Melaminharz-Lack auf Basis eines mittelöligen Alkydharzes und eines butanolveretherten Melaminharzes (AM), ein High-Solid-Acrylharzeinbrennlack auf Basis einer nichtwässrigen Dispersion (HS) sowie ein Polyesterlack (PE) auf Basis von Celluloseacetobutyrat und eines Melaminharzes ausgewählt.
Zur Beurteilung der Eigenschaften der Pigmente auf dem Lacksektor in wässrigen Lacksystemen wurde aus der Vielzahl der bekannten Lacksysteme ein wässriger Lack auf Polyurethanbasis (PUR) ausgewählt.

Zur Beurteilung der Eigenschaften der Pigmente auf dem Druckfarbengebiet wurden aus der Vielzahl der bekannten Drucksysteme ein Nitrocellulose-Alkohol-Tiefdrucksystem mit einer Pigmentkonzentration von 12 Gew.-% Pigment, bezogen auf Mahlgut, beim Dispergieren zum Druckfarbenkonzentrat (NC-A), ein Nitrocellulose-Alkohol-Tiefdrucksystem mit einer hohen Pigmentkonzentration von 28 Gew.-% Pigment, bezogen auf Mahlgut, beim Dispergieren zum Druckfarbenkonzentrat (NC-A-HK), und ein Nitrocellulose-Ester-Tiefdrucksystem mit einer Pigmentkonzentration von 12 Gew.-% Pigment, bezogen auf Mahlgut, beim Dispergieren zum Druckfarbenkonzentrat (NC-E) gewählt.

Die Bestimmung der coloristischen Eigenschaften erfolgte nach DIN 55986.
Die Rheologie des Mahlguts nach der Dispergierung (millbase-Rheologie) wurde visuell anhand der folgenden fünfstufigen Skala bewertet.
5 dünnflüssig
4 flüssig
3 dickflüssig
2 leicht gestockt
1 gestockt

Die Bestimmung der Überlackierechtheit erfolgte nach DIN 53221.
Die Bestimmung der Viskosität erfolgte nach dem Verdünnen des Mahlguts auf die Pigmentendkonzentration mit dem Viskospatel nach Rossmann, Typ 301 der Firma Erichsen.
In den folgenden Beispielen bedeuten Prozentangaben Gewichtsprozente und Teile Gewichtsteile, sofern nicht anders angegeben.

### Beispiel 1

### A) Mahlung und saure Ausrührung

550 Teile Rohpigment P. Blue15, 550 Teile Natriumsulfat und 120 Teile Diethylenglykol werden in einer Schwingmühle 90 min mit Eisenstangen vermahlen. Das Mahlgut wird in 4000 Teilen 5 %iger wässriger Schwefelsäure für 2 h bei 90 °C gerührt. Die Suspension wird filtriert und mit Wasser salzfrei gewaschen. Es werden 740,6 Teile 60,4%igen Presskuchens des Präpigments erhalten.

### B) Finish

82,8 Teile Presskuchen 60,4 %ig, hergestellt gemäß Beispiel 1A), werden in 350 Teilen tert.-Amylalkohol und 283,5 Teilen Wasser suspendiert. Zur Suspension werden 15 Teile Natriumhydroxid und 5 Teile Kupferphthalocyaninsulfonamid der Formel (Xa) zugegeben.

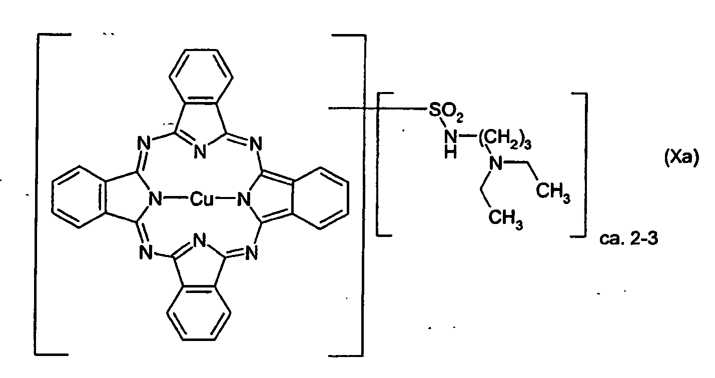

Die Suspension wird 3 Stunden bei 145°C gerührt, der Amylalkohol wird abdestilliert und die Suspension filtriert, mit Wasser gewaschen und der Presskuchen bei 80°C getrocknet. Man erhält 50,5 Teile Phthalocyaninpigmentzubereitung.

### C) Finish: Vergleichsbeispiel ohne Natronlauge

Der Versuch gemäß Beispiel 1B) wird durchgeführt mit dem einzigen Unterschied, dass kein Natriumhydroxid zugegeben wird. Man erhält 52,6 Teile Phthalocyaninpigmentzubereitung.

### D) Prüfung

Die Pigmentzubereitung hergestellt gemäß Beispiel 1B) wird mit der Pigmentzubereitung hergestellt gemäß Beispiel 1C) verglichen.
Im NC-A-HK-Drucksystem ist die Pigmentzubereitung aus Beispiel 1B) merklich farbstärker und transparenter, der Farbton ist deutlich reiner und der Druck merklich glänzender.
Im PUR-Lacksystem ist die Pigmentzubereitung aus Beispiel 1B) wesentlich farbstärker, der Farbton ist merklich reiner, die Metalliclackierung ist wesentlich farbstärker und brillanter.
Im AM-Lacksystem ist die Pigmentzubereitung aus Beispiel 1B) deutlich farbstärker, der Farbton ist merklich reiner.

### Beispiel 2

### A) Finish

153,3 Teile Presskuchen 58,7 %ig, hergestellt gemäß Beispiel 1A), werden in 558 Teilen iso-Butanol und 299,6 Teilen Wasser suspendiert. Es werden 15,1 Teile Natriumhydroxid und 13,9 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest zugegeben und auf 150°C erhitzt. Bei 150°C wird 5 Stunden gerührt, dann wird das iso-Butanol abdestilliert, die Suspension filtriert, der Presskuchen salzfrei gewaschen und bei 80°C getrocknet. Man erhält 88 Teile Phthalocyaninpigmentzubereitung.

### B) Vergleichsbeispiel: Finish ohne Phthalocyaninsulfonsäure

Der Versuch gemäß Beispiel 2A) wird durchgeführt mit dem einzigen Unterschied, dass keine Phthalocyaninsulfonsäure zugegeben wird. Man erhält 85 Teile Phthalocyaninpigment.

### C) Vergleichsbeispiel Finish: Zugabe Phthalocyaninsulfonsäure erst nach Entfernen des organischen Lösemittels

Der Versuch gemäß Beispiel 2A) wird durchgeführt mit dem einzigen Unterschied, dass die Phthalocyaninsulfonsäure erst nach dem destillativen Entfernen des iso-Butanols zugegeben wird und dann die wässrige Suspension 2 Stunden bei Siedehitze gerührt wird. Man erhält 87 Teile Phthalocyaninpigmentzubereitung.

### D) Vergleichsbeispiel Finish: Zugabe Phthalocyaninsulfonsäure und Natriumhydroxid erst nach Entfernen des organischen Lösemittels

Der Versuch gemäß Beispiel 2A) wird durchgeführt mit dem einzigen Unterschied, dass die Phthalocyaninsulfonsäure und das Natriumhydroxid erst nach dem destillativen Entfernen des iso-Butanols zugegeben werden und dann die wässrige Suspension 2 Stunden bei Siedehitze gerührt wird. Man erhält 86 Teile Phthalocyaninpigmentzubereitung.

### E) Vergleichsbeispiel Finish: Zugabe Natriumhydroxid erst nach Entfernen des organischen Lösemittels

Der Versuch gemäß Beispiel 2A) wird durchgeführt mit dem einzigen Unterschied, dass das Natriumhydroxid erst nach dem destillativen Entfernen des iso-Butanols zugegeben wird und dann die wässrige Suspension 2 Stunden bei Siedehitze gerührt wird. Man erhält 84,5 Teile Phthalocyaninpigmentzubereitung.

### F) Prüfung

In PVC liefert die Pigmentzubereitung aus Beispiel 2A) farbstarke, grünstichig-blaue Färbungen mit hoher Reinheit und mit sehr guter Ausblutechtheit.
Im AM-Lacksystem liefert die Pigmentzubereitung aus Beispiel 2A) farbstarke, transparente grünstichig-blaue Färbungen mit hoher Reinheit, die Glanzmessung ergibt den Wert 73.
Im NC-A-System liefert die Pigmentzubereitung aus Beispiel 2A) farbstarke, transparente, grünstichig-blaue und glänzende Färbungen. Die Pigmentzubereitung aus Beispiel 2A) ist im Vergleich zu den Pigmentzubereitungen aus den Beispielen 2B), 2C), 2D) und 2E) in PVC farbstärker und reiner, im AM-Lacksystem ist es meist farbstärker, und im NC-A-System farbstärker, transparenter und glänzender:

| **Pig.-Zuber. Bsp 2A** | **in PVC** | **in PVC** | **in AM** |
|---|---|---|---|
| **ist verglichen mit** | **Farbstärke** | **Reinheit** | **Farbstärke** |
| Bsp. 2B | deutlich farbstärker | merklich reiner | wesentlich farbstärker |
| Bsp. 2C | deutlich farbstärker | merklich reiner | wesentlich farbstärker |
| Bsp. 2D | etwas farbstärker | etwas reiner | deutlich farbstärker |
| Bsp. 2E | wesentlich farbstärker | wesentlich reiner | gleich farbstark |

| **Pig.-Zuber. Bsp 2A** | **in NC-A** | **in NC-A** | **in NC-A** |
|---|---|---|---|
| **ist verglichen mit** | **Farbstärke** | **Transparenz** | **Glanz** |
| Bsp. 2B | wesentlich farbstärker | bedeutend transparenter | bedeutend glänzender |
| Bsp. 2C | wesentlich farbstärker | bedeutend transparenter | bedeutend glänzender |
| Bsp. 2D | deutlich farbstärker | deutlich transparenter | wesentlich glänzender |
| Bsp. 2E | etwas farbstärker | merklich transparenter | deutlich glänzender |

Im PE-und PUR-Lacksystem liefert die Pigmentzubereitung aus Beispiel 2A) farbstarke, transparente grünstichig-blaue Färbungen mit hoher Reinheit, die Metallic-Lackierungen sind farbstark und brillant.
Im PE-Lacksystem ist die Pigmentzubereitung aus Beispiel 2A) im Vergleich zu den Pigmentzubereitungen aus den Beispielen 2B), 2C), 2D) und 2E) farbstärker, meist transparenter, reiner und der Metallic ist farbstärker und brillanter; im PUR-Lacksystem ist die Pigmentzubereitung aus Beispiel 2A) im Vergleich zu den Pigmentzubereitungen aus den Beispielen 2B), 2C) und 2D) ebenfalls farbstärker, transparenter, reiner und der Metallic ist farbstärker und brillanter:
st. = farbstärker, tra. = transparenter, de. = deckender, rei. = reiner, brill. = brillanter

| Pig.-Zuber. Bsp 2A | in PE | in PE | in PE | in PE |
|---|---|---|---|---|
| ist verglichen mit | Farbstärke | Transparenz | Reinheit | Metallic |
| Bsp. 2B | bedeutend st. | bedeutend tra. | bedeutend rei. | bedeutend st. & brill. |
| Bsp. 2C | wesentlich st. | wesentlich tra. | deutlich rei. | wesentlich st. & brill. |
| Bsp. 2D | deutlich st. | deutlich tra. | merklich rei. | deutlich st. & brill. |
| Bsp. 2E | merklich st. | etwas de. | etwas rei. | deutlich st. & brill. |

| Pig.-Zuber. Bsp 2A | in PUR | in PUR | in PUR | in PUR |
|---|---|---|---|---|
| ist verglichen mit | Farbstärke | Transparenz | Reinheit | Metallic |
| Bsp. 2B | wesentlich st. | deutlich tra. | wesentlich rei. | wesentlich st. & brill. |
| Bsp. 2C | wesentlich st. | deutlich tra. | wesentlich rei. | wesentlich st. & brill. |
| Bsp. 2D | deutlich st. | etwas tra. | merklich rei. | deutlich st. & brill. |

### G) Vergleichsbeispiel: Finish ohne Natriumhydroxid

Der Versuch gemäß Beispiel 2A) wird durchgeführt mit dem einzigen Unterschied, dass kein Natriumhydroxid zugegeben wird. Man erhält 90 Teile Phthalocyaninpigmentzubereitung.
Diese Pigmentzubereitung ist im Vergleich zu der Pigmentzubereitungen aus dem Beispiel 2A) im NC-A-System merklich farbschwächer, merklich deckender und deutlich matter.

Im PE-Lacksystem ist sie deutlich deckender, deutlich farbschwächer, bedeutend trüber und die Metalliclackierung ist wesentlich farbschwächer.

### Beispiel 3

### A) Finish

165,6 Teile Presskuchen 60,4%ig, hergestellt gemäß Beispiel 1A), werden in 620 Teilen tert.-Amylalkohol und 350,2 Teilen Wasser suspendiert. Es werden 4,2 Teile Natriumhydroxid und 15,4 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest zugegeben und auf 150°C erhitzt. Bei 150°C wird 2 Stunden gerührt, dann wird der Amylalkohol abdestilliert, die Suspension filtriert, der Presskuchen salzfrei gewaschen. Man erhält 239 Teile Presskuchen 40,4 %ig der Phthalocyaninpigmentzubereitung.

### B) Trocknung

59 Teile eines Presskuchens, hergestellt gemäß Beispiel 3A), werden bei 80°C getrocknet. Man erhält 23,8 Teile Phthalocyaninpigmentzubereitung.
Im AM-Lacksystem erhält man farbstarke, transparente und grünstichig-blaue Lackierungen, die Rheologie wird mit 5 bewertet, die Glanzmessung ergibt den Wert 77 und die Viskosität beträgt 4,0 sec.
Im PUR-Lacksystem sind die Lackierungen ebenfalls farbstark, transparent und grünstichig-blau, die Überlackierechtheit ist sehr gut und die Rheologie wird mit 3 bewertet.
Im NC-A-HK-Drucksystem werden farbstarke, transparente und grünstichig-blaue Drucke mit hohem Glanz erhalten, die Viskosität des Druckfarbenkonzentrats nach der Anreibung ist sehr niedrig.

### C) Nachbehandlung

79,7 Teile eines Presskuchens, hergestellt gemäß Beispiel 3A), werden in 250 Teilen Wasser angeteigt und auf 80°C erwärmt. Es werden 7,7 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest zugegeben und 1 Stunde bei 80°C gerührt. Die Suspension wird filtriert, der Presskuchen gewaschen und getrocknet. Man erhält 32,6 Teile Phthalocyaninpigmentzubereitung.
Im AM-Lacksystem erhält man farbstarke, transparente und grünstichig-blaue Lackierungen, die Rheologie wird mit 5 bewertet, die Glanzmessung ergibt den Wert 55 und die Viskosität beträgt 3,3 sec.
Im NC-A-HK-Drucksystem werden farbstarke, transparente und grünstichig-blaue Drucke mit hohem Glanz erhalten, die Viskosität des Druckfarbenkonzentrats nach der Anreibung ist sehr niedrig.

### D) Nachbehandlung

100,3 Teile eines Presskuchens, hergestellt gemäß Beispiel 3A), werden in 300 Teilen Wasser angeteigt. Nach Zugabe von 1200 Teilen Glasperlen von Durchmesser 1 mm als Mahlkörper wird die Suspension in eine Rührwerkskugelmühle mit Scheibenrührwerk (Hersteller: Draiswerke GmbH, Mannheim) gefüllt und 10 Minuten lang mit einer Umfangsgeschwindigkeit von 10,2 m/s und einer Leistungsdichte von 0,45 kW/I Mahlraum bei 20°C gemahlen. Danach werden die Mahlkörper durch Sieben vom Mahlgut abgetrennt, dann wird abgesaugt, mit Wasser gewaschen und bei 80°C getrocknet.
Man erhält 38,3 Teile Phthalocyaninpigmentzubereitung.
Im AM-Lacksystem erhält man farbstarke, transparente und grünstichig-blaue Lackierungen, die Rheologie wird mit 5 bewertet, die Glanzmessung ergibt den Wert 76 und die Viskosität beträgt 3,1 sec.
Im NC-A-HK-Drucksystem werden farbstarke, transparente und grünstichig-blaue Drucke mit hohem Glanz erhalten, die Viskosität des Druckfarbenkonzentrats nach der Anreibung ist sehr niedrig.

### E)

Ein Presskuchen wird gemäß Beispiel 3A) hergestellt mit dem einzigen Unterschied, dass nicht 5 Gew.-%, sondern 15 Gew.-% bezogen Präpigment an Kupferphthalocyaninsulfonsäure eingesetzt werden. Die Trocknung erfolgt gemäß Beispiel 3B). Mit der Phthalocyaninpigmentzubereitung werden in verschiedenen Druckfarbensystemen Drucke hergestellt:
In den NC-A-HK-, NC-A- und NC-E-Drucksystemen werden farbstarke, transparente Drucke mit grünstichig-blauem und reinem Farbton und mit hohem Glanz erhalten. Die Viskosität im NC-A-HK-System des Druckfarbenkonzentrats nach der Anreibung ist sehr niedrig. Die Flokkulationsstabilität im NC-E-System ist sehr gut.

### Beispiel 4

165,6 Teile Presskuchen 60,4%ig, hergestellt gemäß Beispiel 1A), werden in 300 Teilen Methylethylketon und 220 Teilen Wasser suspendiert. Es werden 15 Teile Natriumhydroxid, 24,7 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest und 6 Teile eines disproportionierten Kolophoniumharzes mit einer Säurezahl von 150-160 zugegeben und auf 120°C erhitzt. Bei 120°C wird 5 Stunden gerührt, dann wird das Methylethylketon abdestilliert. Nach Abkühlen auf 80°C wird eine Lösung aus 15 Teilen Calciumchlorid in 100 Teilen Wasser zugegeben. Mit Salzsäure 31 %ig wird pH 10 gestellt und 1 Stunde bei 80°C gerührt. Die Suspension wird filtriert, der Presskuchen salzfrei gewaschen und bei 80°C getrocknet. Man erhält 105,6 Teile Phthalocyaninpigmentzubereitung.
Im AM-Lacksystem erhält man farbstarke, transparente und grünstichig-blaue Lackierungen, die Rheologie wird mit 5 bewertet, die Glanzmessung ergibt den Wert 71 und die Viskosität beträgt 3,7 sec.
Im PUR-Lacksystem sind die Lackierungen ebenfalls farbstark, transparent und grünstichig-blau, die Überlackierechtheit ist sehr gut.

### Beispiel 5

165,6 Teile Presskuchen 60,4 %ig, hergestellt gemäß Beispiel 1A), werden in 240 Teilen tert.-Amylalkohol und 207,4 Teilen Wasser suspendiert. Es werden 7 Teile Natriumhydroxid, 24,7 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest, 2 Teile N,N,N',N',N'-Pentamethyl-N-talg-1,3-propandiammoniumdichlorid 50%ig und 3 Teile Cocosalkyldimethylbenzylammoniumchlorid 50 %ig zugegeben und auf 170°C erhitzt. Bei 170°C wird 30 Minuten gerührt, dann wird der tert.-Amylalkohol abdestilliert. Die Suspension wird filtriert, der Presskuchen salzfrei gewaschen und bei 80°C getrocknet. Man erhält 99,2 Teile Phthalocyaninpigmentzubereitung. Im AM-Lacksystem erhält man farbstarke, transparente und grünstichig-blaue Lackierungen, die Rheologie wird mit 5 bewertet, die Glanzmessung ergibt den Wert 77 und die Viskosität beträgt 3,8 sec.

Im PUR-Lacksystem sind die Lackierungen ebenfalls farbstark, transparent und grünstichig-blau, die Überlackierechtheit ist sehr gut.

### Beispiel 6

### A) Mahlung und saure Ausrührung

30 Teile Rohpigment P.Blue 15, 90 Teile Natriumchlorid und 3,5 Teile Butylglykol werden in einer Schwingmühle 4 Stunden mit Stahlcylpebs 10 bis 15 mm vermahlen. Das Mahlgut wird in 440 Teilen 5 %iger wässriger Schwefelsäure für 2 h bei 90°C gerührt. Die Suspension wird filtriert und mit Wasser salzfrei gewaschen. Es werden 76 Teile 36,9 %igen Presskuchens des Präpigments erhalten.

### B) Finish

76 Teile Presskuchen 36,9 %ig, hergestellt gemäß Beispiel 6A) werden in 149 Teilen iso-Butanol und 149 Teilen Wasser suspendiert. Es werden 9,2 Teile wässriger Presskuchen 27,4 %ig einer Kupferphthalocyaninsulfonsäure mit einem durchschnittlichen Substitutionsgrad von 1,3 Sulfonsäuregruppen pro Kupferphthalocyaninrest, 0,65 Teile-Talgfettpropylendiamin und 0,28 Teile Cocosfettamin zugegeben. Mit ca. 1,8 Teilen Natronlauge 33 %ig wird pH 11,8 eingestellt und dann auf 140°C erhitzt. Bei 140°C wird 5 Stunden gerührt, dann wird das iso-Butanol abdestilliert. Die Suspension wird filtriert, der Presskuchen salzfrei gewaschen und bei 80°C getrocknet. Man erhält 29,2 Teile Phthalocyaninpigmentzubereitung.
Im AM-Lacksystem erhält man farbstarke, transparente und grünstichig-blaue Lackierungen, die Rheologie wird mit 5 bewertet, die Glanzmessung ergibt den Wert 64, die Viskosität beträgt 3,7 sec und die Überlackierechtheit ist sehr gut.

### Beispiel 7

### A) Mahlung und saure Ausrührung

30 Teile Rohpigment P.Blue 15, 10 Teile Aluminiumsulfathydrat und 1 Teil Butylglykol werden in einer Schwingmühle 4 Stunden mit Stahlcylpebs 10 bis 15 mm vermahlen. Das Mahlgut wird in 160 Teilen 5 %iger wässriger Schwefelsäure für 2 h bei 90°C gerührt. Die Suspension wird filtriert und mit Wasser salzfrei gewaschen. Es werden 50,6 Teile 56,7 %igen Presskuchens des Präpigments erhalten.

### B) Finish

47,3 Teile Presskuchen 56,7 %ig, hergestellt gemäß Beispiel 7A) werden in 375 Teilen tert.-Amylalkohol und 137,1 Teilen Wasser suspendiert. Es werden 3,2 Teile Natriumhydroxid, 7,1 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest, 0,62 Teile N,N-Bis-amino-propyltalgfettamin, 0,62 Teile stabilisiertes Abietylamin und 0,45 Teile eines disproportionierten Kolophoniumharzes mit einer Säurezahl von 150-160 zugegeben. Dann wird auf 145°C erhitzt. Bei 145°C wird 2 Stunden gerührt, dann wird der tert.-Amylalkohol abdestilliert. Die Suspension wird filtriert, der Presskuchen salzfrei gewaschen und bei 80°C getrocknet. Man erhält 27,5 Teile Phthalocyaninpigmentzubereitung.
Im AM-Lacksystem erhält man farbstarke, transparente und grünstichig-blaue Lackierungen und die Überlackierechtheit ist sehr gut.

### Beispiel 8

164,9 Teile Presskuchen 60,6 %ig, hergestellt gemäß Beispiel 1A) werden in 240 Teilen Methylethylketon und 208,1 Teilen Wasser suspendiert. Es werden 7 Teile Natriumhydroxid, 37 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest, 2 Teile N,N',N'-Polyoxyethylen(12)-N-talg-1,3-diaminopropan und 2 Teile Oleylamin, das mit einem 8-fachen Überschuss Ethylenoxid umgesetzt wurde, zugegeben. Dann wird auf 110°C erhitzt. Bei 110°C wird 9 Stunden gerührt. Das Methylethylketon wird abdestilliert, die Suspension filtriert, der Presskuchen salzfrei gewaschen und bei 80°C getrocknet. Man erhält 104,4 Teile Phthalocyaninpigmentzubereitung. Im PUR-Lacksystem erhält man farbstarke, transparente und grünstichig-blaue Lackierungen, der Metallic ist farbstark und brillant und die Überlackierechtheit sehr gut.

### Beispiel 9

164,9 Teile Presskuchen 60,6 %ig, hergestellt gemäß Beispiel 1A) werden in 130 Teilen tert.-Amylalkohol und 305,6 Teilen Wasser suspendiert. Es werden 19,5 Teile Natriumhydroxid, 27,4 Teile wässriger Presskuchen 27,4 %ig einer Kupferphthalocyaninsulfonsäure mit einem durchschnittlichen Substitutionsgrad von 1,3 Sulfonsäuregruppen pro Kupferphthalocyaninrest, 3,2 Teile Kokos-di(2-hydroxyethyl)methylammoniumchlorid 77 %ig und 2 Teile hydriertes Polyoxyethylen(15)talgmethylammoniumchlorid zugegeben. Dann wird auf 125°C erhitzt. Bei 125°C wird 6 Stunden gerührt. Der tert.-Amylalkohol wird abdestilliert, die Suspension filtriert, der Presskuchen salzfrei gewaschen und bei 80°C getrocknet. Man erhält 106,3 Teile Phthalocyaninpigmentzubereitung. Im PUR-Lacksystem erhält man farbstarke, transparente und grünstichig-blaue Lackierungen, der Metallic ist farbstark und brillant und die Überlackierechtheit sehr gut.

### Beispiel 10

164,9 Teile Presskuchen 60,6 %ig, hergestellt gemäß Beispiel 1A) werden in 240 Teilen iso-Butanol und 208,1 Teilen Wasser suspendiert. Es werden 7 Teile Natriumhydroxid, 30,8 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest, 7 Teile Hexadecyltrimethylammoniumchlorid 30 %ig und 4 Teile mit Maleinsäureanhydrid und Fumarsäure modifiziertes Kolophoniumharz mit einer Säurezahl von ca. 260 zugegeben. Dann wird auf 135°C erhitzt. Bei 135°C wird 3 Stunden gerührt. Das iso-Butanol wird abdestilliert, die Suspension filtriert, der Presskuchen salzfrei gewaschen und bei 80°C getrocknet. Man erhält 105 Teile Phthalocyaninpigmentzubereitung.
Im AM-Lacksystem erhält man farbstarke, transparente und grünstichig-blaue Lackierungen, die Rheologie wird mit 5 bewertet, die Glanzmessung ergibt den Wert 82, die Viskosität beträgt 3,5 sec und die Überlackierechtheit ist sehr gut.
Im PUR-Lacksystem erhält man farbstarke, transparente und grünstichig-blaue Lackierungen, der Metallic ist farbstark und brillant und die Überlackierechtheit sehr gut.

### Beispiel 11

### A) Feinverteilung durch Acid Pasting

200 Teile Tri-/Tetrachlorphthalocyanin Rohblau werden in 2000 Teilen Schwefelsäure 95-98 %ig gelöst. Die Lösung wird auf eine Mischung aus 5000 Teilen Eis und 5000 Teilen Wasser gegossen. Nach Heizen auf 80°C wird 30 Minuten bei 80°C gerührt, dann wird die Suspension filtriert und der Presskuchen mit Wasser salzfrei gewaschen. Man erhält 945 Teile Presskuchen 20,3 %ig.

### B) Finish

246 Teile Presskuchen 20,3 %ig, hergestellt gemäß Beispiel 2A), werden in 330 Teilen tert.-Amylalkohol und 120,8 Teilen Wasser suspendiert. Nach Zugabe von 13,2 Teilen Natriumhydroxid, 5 Teilen Hexadecyltrimethylammoniumchlorid 30 %ig und 15,4 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest wird die Suspension auf 130°C erhitzt und 3 Stunden bei 130°C gerührt. Nach dem Abkühlen wird der Amylalkohol abdestilliert, die Suspension wird filtriert, der Presskuchen gewaschen und bei 80°C getrocknet. Man erhält 50,8 Teile Phthalocyaninpigmentzubereitung. Im HS-, PUR- und PE-Lacksystem werden farbstarke, transparente, grünstichig-blaue und glänzende Lackierungen mit reinem Farbton erhalten, die Metalliclackierungen sind farbstark und brillant. Der im PE-Lacksystem an gegossenen Folien gemessene Glanzwert beträgt 10.

### C) Finish: Vergleichsbeispiel ohne Natriumhydroxid

Der Versuch gemäß Beispiel 11 B) wird durchgeführt mit dem einzigen Unterschied, dass kein Natriumhydroxid zugegeben wird. Man erhält 50 Teile Phthalocyaninpigmentzubereitung.
Im PE-Lacksystem sind die Lackierungen verglichen mit Beispiel 11 B) deutlich deckender, deutlich farbschwächer und deutlich trüber, der an gegossenen Folien gemessene Glanzvirert beträgt lediglich 2, und die Metalliclackierung ist wesentlich farbschwächer mit fahlem Farbton.

### D) Finish: Vergleichsbeispiel ohne Natriumhydroxid und ohne - Kupferphthalocyaninsulfonsäuresalz

Der Versuch gemäß Beispiel 11B) wird durchgeführt mit dem einzigen Unterschied, dass kein Natriumhydroxid, keine Phthalocyaninsulfonsäure und keine Ammoniumchloridverbindung zugegeben wird. Man erhält 37 Teile Phthalocyaninpigment.
Im PE-Lacksystem sind die Lackierungen verglichen mit Beispiel 11 B) merklich deckender, merklich farbschwächer und merklich trüber, der an gegossenen Folien gemessene Glanzwert beträgt lediglich 4, und die Metalliclackierung ist wesentlich farbschwächer mit fahlem Farbton.

## Patentansprüche

1. Verfahren zur Herstellung einer Phthalocyanin-Pigmentzubereitung, **dadurch gekennzeichnet, dass** ein Phthalocyanin-Rohpigment durch ein Verfahren aus der Gruppe Trockenmahlung; Nassmahlung in einem inerten flüssigen Medium in einer herkömmlichen kontinuierlichen oder diskontinuierlichen Niederenergie-Rührwerkskugelmühle, die mit einer Leistungsdichte von unter 2,5 kW pro Liter Mahlraum und einer Rührwerksumfangsgeschwindigkeit von unter 12 m/s betrieben wird, unter der Einwirkung von Mahlkörpern; Salzknetung; Acid Pasting und Acid Swelling unter Bildung eines Präpigments feinverteilt wird und dann das Präpigment einer Finishbehandlung, in einer Mischung aus Wasser und einem organischen Lösemittel bei einem pH größer oder gleich 9, bei einer Temperatur von 100 bis 250°C und in Gegenwart mindestens eines Pigmentdispergators aus der Gruppe der Phthalocyaninsulfonsäuren, Phthalocyanincarbonsäuren, Phthalocyaninsulfonsäuresalze, Phthalocyanincarbonsäuresalze und Phthalocyaninsulfonamide unterzogen wird.

2. Verfahren nach Anspruch 1, **dadurch gekennzeichnet, dass** das Phthalocyanin halogenfrei oder mit bis zu 16 Halogenatomen substituiert ist.

3. Verfahren nach Anspruch 1 oder 2, **dadurch gekennzeichnet, dass** das Phthalocyanin ein Kupferphthalocyanin ist.

4. Verfahren nach einem oder mehreren der Ansprüche 1 bis 3, **dadurch gekennzeichnet, dass** das organische Lösemittel der Finishbehandlung ein Lösemittel aus der Gruppe der C₁-C₁₀-Alkohole, Glykole, Polyglykole, Ether, Glykolether, Ketone, aliphatischen Säureamide, Harnstoffderivate, cyclischen Carbonsäureamide, Nitrile, aliphatischen oder aromatischen Amine, chlorierten aliphatischen Kohlenwasserstoffen, aromatischen Kohlenwasserstoffen, substituierten Aromaten, aromatischen Heterocyclen, Sulfone und Sulfoxide, sowie Mischungen davon ist.

5. Verfahren nach einem oder mehreren der Ansprüche 1 bis 4, **dadurch gekennzeichnet, dass** Gewichtsverhältnis Wasser zu organischem Lösemittel 5 : 95 bis 95 : 5 beträgt.

6. Verfahren nach einem oder mehreren der Ansprüche 1 bis 5, **dadurch gekennzeichnet, dass** pro Gewichtsteil Pigment 0,5 bis 40 Gewichtsteile der Mischung aus Wasser und organischem Lösemittel eingesetzt werden.

7. Verfahren nach einem oder mehreren der Ansprüche 1 bis 6, **dadurch gekennzeichnet, dass** der Pigmentdispergator eine Verbindung der Formel (I) ist, 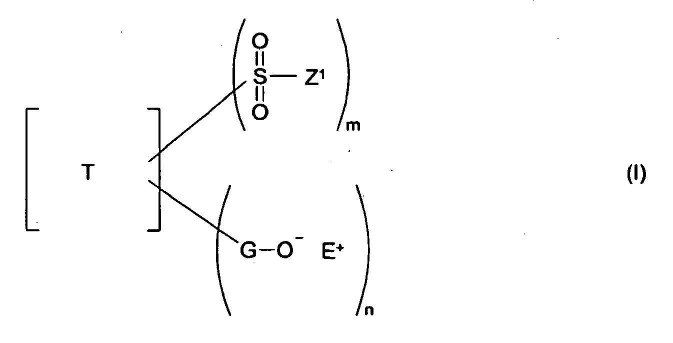 worin
T einen Phthalocyaninrest darstellt, der entweder metallfrei ist oder ein Metallatom aus der Gruppe Cu, Fe, Zn, Ni, Co, Al, Ti oder Sn enthält, insbesondere Cu, und der mit 1 bis 4 Chloratomen substituiert oder vorzugsweise chlorfrei ist;
m und n gleich oder verschieden sind und eine Zahl von 0 bis 4 darstellen mit der Maßgabe, dass die Summe von m und n eine Zahl von 1 bis 4 beträgt;
und worin der Rest Z¹ einen Rest der Formel (Ia) darstellt, 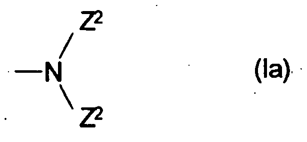 worin die beiden Reste Z² gleich oder verschieden sind und
ein Rest der Formel (Ib) bedeuten,
-[X-Y]ₕ-R³ (Ib)
worin
h eine Zahl von 0 bis 100, vorzugsweise 0 bis 20, besonders bevorzugt 0, 1, 2, 3, 4 oder 5;
X einen C₂-C₆-Alkyfenrest, einen C₅-C₇-Cycloalkylenrest, oder eine Kombination dieser Reste ist, wobei diese Reste durch 1 bis 4 C₁-C₄-Alkylreste, Hydroxyreste, C₁-C₄-Alkoxyreste, (C₁-C₄)-Hydroxyalkylreste und/oder durch 1 bis 2 weitere C₅-C₇-Cycloalkylreste substituiert sein können, oder worin X, wenn h > 1 ist, auch eine Kombination der genannten Bedeutungen sein kann;
Y eine -O-, 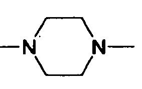 oder eine -NR²-Gruppe,
oder worin Y, wenn h > 1 ist, auch eine Kombination der genannten Bedeutungen sein kann;
R² und R³ unabhängig voneinander ein Wasserstoffatom, eine substituierte oder unsubstituierte, oder teil- oder perfluorierte, verzweigte oder unverzweigte C₁-C₂₀-Alkylgruppe, eine substituierte oder unsubstituierte C₅-C₈- Cycloalkylgruppe oder eine substituierte oder unsubstituierte, oder teil- oder perfluorierte C₂-C₂₀-Alkenylgruppe darstellen, wobei die Substituenten Hydroxy, Phenyl, Cyano, Chlor, Brom, Amino, C₂-C₄-Acyl oder C₁-C₄-Alkoxy sein und vorzugsweise 1 bis 4 an der Zahl sein können, oder
R² und R³ zusammen mit dem N-Atom der NR²-Gruppe einen gesättigten, ungesättigten oder aromatischen heterocyclischen 5- bis 7-gliedrigen Ring bilden, der gegebenenfalls 1 oder 2 weitere Stickstoff-, Sauerstoff- oder Schwefelatome oder Carbonylgruppen im Ring enthält, gegebenenfalls durch 1, 2 oder 3 Reste aus der Gruppe OH, NH₂, Phenyl, CN, Cl, Br, C₁-C₄-Alkyl, C₁-C₄-Alkoxy, C₂-C₄-Acyl und Carbamoyl substituiert ist, und der gegebenenfalls 1 oder 2 benzoannellierte gesättigte, ungesättigte oder aromatische, carbocyclische oder heterocyclische Ringe trägt;
oder
Z² Wasserstoff, Hydroxy, Amino, Phenyl, (C₁-C₄)-Alkyfen-phenyl, C₅-C₃₀- Cycloalkyl, C₂-C₃₀-Alkenyl, oder verzweigtes oder unverzweigtes C₁-C₃₀-Alkyl ist, wobei der Phenylring, die (C₁-C₄)-Alkylen-phenyl-Gruppe, die C₅-C₃₀- Cycloalkylgruppe, die C₂-C₃₀-Alkenylgruppe und die C₁-C₃₀-Alkylgruppe durch ein oder mehrere, z.B. 1, 2, 3 oder 4, Substituenten aus der Gruppe Cl, Br, CN, NH₂, OH, C₆H₅, mit 1, 2 oder 3 C₁-C₂₀-Alkoxyresten substituiertes C₆H₅, Carbamoyl, Carboxy, C₂-C₄-Acyl, C₁-C₈-Alkyl, NR²R³, wobei R² und R³ die oben genannte Bedeutung haben, und C₁-C₄-Alkoxy, z.B. Methoxy oder Ethoxy, substituiert sein können, oder die Alkylgruppe und die Alkenylgruppe perfluoriert oder teilfluoriert sein können;
G eine bivalente Gruppe -CO-, -SO₂-, -SO₂N(R⁶)-R⁵-CO-, -SO₂N(R⁶)-R⁵-SO₂-, -CON(R⁶)-R⁵-CO- oder -CON(R⁶)-R⁵-SO₂- bedeutet, und R⁵ einen bivalenten verzweigten oder unverzweigten, gesättigten oder ungesättigten, aliphatischen Kohlenwasserstoffrest mit 1 bis 20 C-Atomen, oder einen C₅-C₇- Cycloalkylenrest, oder einen bivalenten aromatischen Rest mit 1, 2 oder 3, vorzugsweise 1 oder 2 aromatischen Ringen, wobei die Ringe kondensiert vorliegen oder durch eine Bindung verknüpft sein können, wie beispielsweise ein Phenyl-, Biphenyl- oder Naphthyl-Rest, oder einen heterocyclischen Rest mit 1, 2 oder 3 Ringen, der 1, 2, 3 oder 4 Heteroatome aus der Gruppe O, N und S enthält, oder eine Kombination davon bedeutet; wobei die vorstehend genannten Kohlenwasserstoff-, Cycloalkylen-, Aromaten- und Heteroaromaten-Reste durch 1, 2, 3 oder 4 Substituenten aus der Gruppe OH, CN, F, Cl, Br, NO₂, CF₃, C₁-C₆-Alkoxy, S-C₁-C₆-Alkyl, NHCONH₂, NHC(NH)NH₂, NHCO-C₁-C₆-Alkyl, C₁-C₆-Alkyl, COOR²⁰, CONR²⁰R²¹, NR²⁰R²¹, SO₃R²⁰ oder SO₂-NR²⁰R²¹ substituiert sein können, wobei R²⁰ und R²¹ gleich oder verschieden sind und Wasserstoff, Phenyl oder C₁-C₆-Alkyl bedeuten, und R⁶ Wasserstoff, R⁵-H, R⁵-COO⁻E⁺ oder R⁵-SO₃⁻E⁺ bedeutet; und
E⁺ H⁺; das Äquivalent M^{s+}/s eines Metallkations M^{s+}, vorzugsweise aus der 1. bis 5. Hauptgruppe oder aus der 1. oder 2. oder der 4. bis 8. Nebengruppe des Periodensystems der chemischen Elemente bezeichnet, wobei s eine der Zahlen 1, 2 oder 3 ist;
ein Phosphoniumion; oder ein unsubstituiertes oder substituiertes Ammoniumion bedeutet.

8. Verfahren nach einem oder mehreren der Ansprüche 1 bis 7, **dadurch gekennzeichnet, dass** der mindestens eine Pigmentdispergator in einer Menge von 0,1 bis 25 Gew.-%, bezogen auf das Phthalocyanin-Rohpigment, eingesetzt wird.

9. Verfahren nach einem oder mehreren der Ansprüche 1 bis 8, **dadurch gekennzeichnet, dass** zusätzlich Hilfsmittel aus der Gruppe der Tenside, nichtpigmentären und pigmentären Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon, eingesetzt werden.

## Claims

1. A method for the production of a phthalocyanine pigment preparation, said method comprising finely dividing a crude phthalocyanine pigment by means of a method selected from the group consisting of dry grinding, wet grinding in an inert liquid medium in a conventional continuous or discontinuous low-energy agitated ball mill operated with a power density of less than 2.5 kW per liter of grinding space and with a peripheral stirrer speed of less than 12 m/s, under the action of grinding media, salt kneading, acid pasting and acid swelling to form a prepigment and then subjecting the prepigment to a finish treatment in a mixture of water and an organic solvent at a pH greater than or equal to 9, at a temperature of 100 to 250°C and in the presence of at least one pigment dispersant selected from the group consisting of phthalocyaninesulfonic acids, phthalocyaninecarboxylic acids, phthalocyaninesulfonic salts, phthalocyaninecarboxylic salts and phthalocyaninesulfonamides.

2. The method as claimed in claim 1, wherein the phthalocyanine is halogen-free or is substituted by up to 16 halogen atoms.

3. The method as claimed in claim 1 or 2, wherein the phthalocyanine is a copper phthalocyanine.

4. The method as claimed in one or more of claims 1 to 3, wherein the organic solvent of the finish treatment is a solvent from the group of C₁-C₁₀ alcohols, glycols, polyglycols, ethers, glycol ethers, ketones, aliphatic acid amides, urea derivatives, cyclic carboxamides, nitriles, aliphatic or aromatic amines, chlorinated aliphatic hydrocarbons, aromatic hydrocarbons, substituted aromatics, aromatic heterocycles, sulfones and sulfoxides, and mixtures thereof.

5. The method as claimed in one or more of claims 1 to 4, wherein the weight ratio of water to organic solvent is 5:95 to 95:5.

6. The method as claimed in one or more of claims 1 to 5, wherein 0.5 to 40 parts by weight of the mixture of water and organic solvent are used per part by weight of pigment.

7. The method as claimed in one or more of claims 1 to 6, wherein the pigment dispersant is a compound of the formula (I) 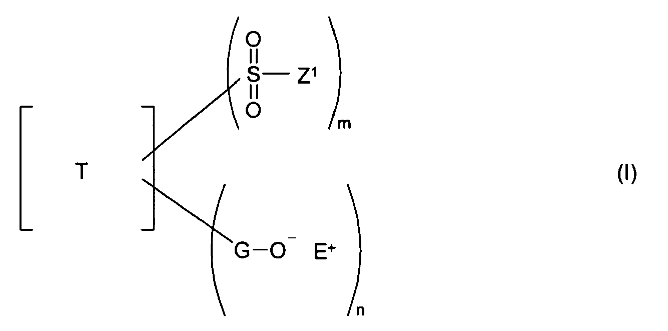 in which
T is a phthalocyanine radical which is either metal-free or contains a metal atom from the group Cu, Fe, Zn, Ni, Co, Al, Ti or Sn, especially Cu, and which is substituted by 1 to 4 chlorine atoms or preferably is chlorine-free;
m and n are identical or different and are a number from 0 to 4 with the proviso that the sum of m and n is a number from 1 to 4;
and in which the radical Z¹ is a radical of the formula (Ia) 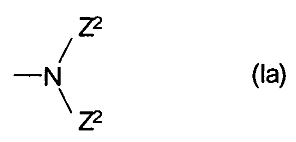 in which the two radicals Z² are identical or different and are a radical of the formula (Ib)
-[x-Y]ₕ-R³ (Ib)
in which
h is a number from 0 to 100, preferably 0 to 20, more preferably 0, 1, 2, 3, 4 or 5;
X is a C₂-C₆ alkylene radical, a C₅-C₇ cycloalkylene radical, or a combination of these radicals, it being possible for these radicals to be substituted by 1 to 4 C₁-C₄ alkyl radicals, hydroxyl radicals, C₁-C₄ alkoxy radicals, (C₁-C₄)-hydroxyalkyl radicals and/or by 1 to 2 further C₅-C₇ cycloalkyl radicals, or in which X, if h > 1, can also be a combination of the stated definitions;
Y is an -O-, 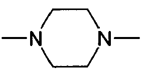 or a group -NR²-, or in which Y, if h > 1, can also be a combination of the stated definitions;
R² and R³ independently of one another are a hydrogen atom, a substituted or unsubstituted, or partly fluorinated or perfluorinated, branched or unbranched C₁-C₂₀ alkyl group, a substituted or unsubstituted C₅-C₈ cycloalkyl group or a substituted or unsubstituted, or partly fluorinated or perfluorinated C₂-C₂₀ alkenyl group, it being possible for the substituents to be hydroxyl, phenyl, cyano, chlorine, bromine, amino, C₂-C₄ acyl or C₁-C₄ alkoxy and to be preferably 1 to 4 in number, or
R² and R³ together with the nitrogen atom of the NR² group form a saturated, unsaturated or aromatic heterocyclic 5- to 7-membered ring which if desired contains 1 or 2 further nitrogen, oxygen or sulfur atoms or carbonyl groups in the ring, is unsubstituted or substituted by 1, 2 or 3 radicals from the group OH, NH₂, phenyl, CN, Cl, Br, C₁- C₄ alkyl, C₁-C₄ alkoxy, C₂-C₄ acyl and carbamoyl, and which if desired carries 1 or 2 benzo-fused saturated, unsaturated or aromatic, carbocyclic or heterocyclic rings;
or
Z² is hydrogen, hydroxyl, amino, phenyl, (C₁-C₄)-alkylene-phenyl, C₅- C₃₀ cycloalkyl, C₂-C₃₀ alkenyl, or is branched or unbranched C₁- C₃₀ alkyl, it being possible for the phenyl ring, the (C₁-C₄)-alkylene- phenyl group, the C₅-C₃₀ cycloalkyl group, the C₂-C₃₀ alkenyl group and the C₁-C₃₀ alkyl group to be substituted by one or more, e.g., 1, 2, 3 or 4, substituents from the group Cl, Br, CN, NH₂, OH, C₆H₅, C₆H₅ substituted by 1, 2 or 3 C₁-C₂₀ alkoxy radicals, carbamoyl, carboxyl, C₂-C₄ acyl, C₁-C₈ alkyl, NR²R³, where R² and R³ are as defined above, and C₁-C₄ alkoxy, e.g., methoxy or ethoxy, or for the alkyl group and the alkenyl group to be perfluorinated or partly fluorinated;
G is a divalent group -CO-, -SO₂-, -SO₂N(R⁶)-R⁵-CO-, -SO₂N(R⁶)-R⁵- SO₂-, -CON(R⁶)-R⁵-CO- or -CON(R⁶)-R⁵-SO2-, and R⁵ is a divalent branched or unbranched, saturated or unsaturated, aliphatic hydrocarbon radical having 1 to 20 carbon atoms, or a C₅-C₇ cycloalkylene radical, or a divalent aromatic radical having 1, 2 or 3, preferably 1 or 2, aromatic rings, it being possible for the rings to be in fused form or to be linked by a bond, such as, for example, a phenyl, biphenyl or naphthyl radical, or a heterocyclic radical having 1, 2 or 3 rings and containing 1, 2, 3 or 4 heteroatoms from the group O, N and S, or is a combination thereof; it being possible for the aforementioned hydrocarbon, cycloalkylene, aromatic and heteroaromatic radicals to be substituted by 1, 2, 3 or 4 substituents from the group OH, CN, F, Cl, Br, NO₂, CF₃, C₁-C₆ alkoxy, S-C₁- C₆ alkyl, NHCONH₂, NHC(NH)NH₂, NHCO-C₁-C₆ alkyl, C₁-C₆ alkyl, COOR²⁰, CONR²⁰R²¹, NR²⁰R²¹, SO₃R²⁰ or SO₂-NR²⁰R²¹, R²⁰ and R²¹being identical or different and being hydrogen, phenyl or C₁-C₆ alkyl, and R⁶ is hydrogen, R⁵-H, R⁵-COO⁻E⁺ or R⁵-SO₃⁻E⁺; and
E⁺ is H⁺; the equivalent M^{s+}/s of a metal cation M^{s+}, preferably from main groups 1 to 5 or from transition groups 1 or 2 or 4 to 8 of the Periodic Table of the Chemical Elements, s being one of the numbers 1, 2 or 3;
a phosphonium ion; or an unsubstituted or substituted ammonium ion.

8. The method as claimed in one or more of claims 1 to 7, wherein the at least one pigment dispersant is used in an amount of 0.1% to 25% by weight, based on the crude phthalocyanine pigment.

9. The method as claimed in one of more of claims 1 to 8, wherein additionally auxiliaries are used from the group of surfactants, nonpigmentary and pigmentary dispersants, fillers, standardizers, resins, waxes, defoamers, antidust agents, extenders, shading colorants, preservatives, drying retarders, rheology control additives, wetting agents, antioxidants, UV absorbers, light stabilizers, or a combination thereof.

## Revendications

1. Procédé pour la préparation d'une composition pigmentaire de phtalocyanine, **caractérisé en ce qu'**un pigment brut de phtalocyanine est réparti finement par un procédé du groupe comprenant le broyage à sec ; le broyage humide dans un milieu liquide inerte dans un broyeur à billes à agitateur basse énergie continu ou discontinu usuel qui est opéré à une puissance de moins de 2,5 kW par litre d'espace de broyage et à une vitesse périphérique de l'agitateur inférieure à 12 m/s, sous l'action des corps de broyage ; le malaxage au sel ; l'empâtage à l'acide (Acid Pasting) et le gonflement à l'acide (Acid Swelling) avec formation d'un prépigment et **en ce que** le prépigment est soumis à un traitement de finition, dans un mélange d'eau et d'un solvant organique à un pH supérieur ou égal à 9, à une température de 100 à 250°C et en présence d'au moins un dispersant de pigments du groupe des acides phtalocyaninesulfoniques, des acides phtalocyaninecarboxyliques, des sels de l'acide phtalocyaninesulfonique, des sels de l'acide phtalocyaninecarboxylique et des phtalocyaninesulfonamides.

2. Procédé selon la revendication 1, **caractérisé en ce que** la phtalocyanine est exempte d'halogènes ou substituée par jusqu'à 16 atomes d'halogène.

3. Procédé selon la revendication 1 ou 2, **caractérisé en ce que** la phtalocyanine est une phtalocyanine de cuivre.

4. Procédé selon l'une ou plusieurs des revendications 1 à 3, **caractérisé en ce que** le solvant organique du traitement de finition est un solvant du groupe des C₁-C₁₀-alcools, des glycols, des polyglycols, des éthers, des glycoléthers, des cétones, des amides d'acides aliphatiques, des dérivés d'urée, des amides d'acides carboxyliques cycliques, des nitriles, des amines aliphatiques ou aromatiques, des hydrocarbures aliphatiques chlorés, des hydrocarbures aromatiques, des aromatiques substitués, des hétérocycles aromatiques, des sulfones et des sulfoxydes ainsi que les mélanges de ceux-ci.

5. Procédé selon l'une ou plusieurs des revendications 1 à 4, **caractérisé en ce que** le rapport pondéral eau à solvant organique est de 5:95 à 95:5.

6. Procédé selon l'une ou plusieurs des revendications 1 à 5, **caractérisé en ce qu'**on utilise par partie en poids de pigment 0,5 à 40 parties en poids du mélange d'eau et d'un solvant organique.

7. Procédé selon l'une ou plusieurs des revendications 1 à 6, **caractérisé en ce que** le dispersant de pigments est un composé de formule (I) 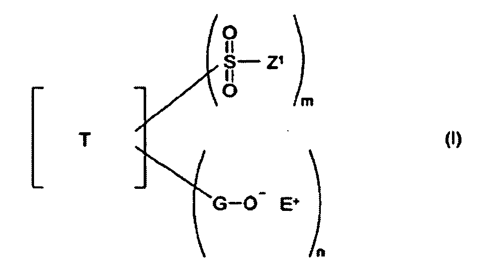 où
T représente un radical phtalocyanine, qui est exempt de métal ou qui contient un atome de métal du groupe Cu, Fe, Zn, Ni, Co, Al, Ti ou Sn, en particulier Cu, et qui est substitué par 1 à 4 atomes de chlore ou qui est de préférence exempt de chlore ;
m et n sont identiques ou différents et représentent un nombre de 0 à 4, à condition que la somme de m et n soit un nombre de 1 à 4 ;
et où le radical Z¹ représente un radical de formule (Ia), 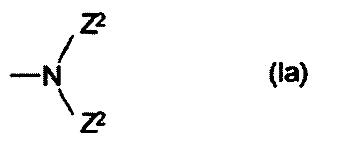 où les deux radicaux Z² sont identiques ou différents et signifient un radical de formule (Ib),
-[X-Y]ₕ-R³ (Ib)
où
h représente un nombre de 0 à 100, de préférence de 0 à 20, de manière particulièrement préférée de 0, 1, 2, 3, 4 ou 5 ;
X représente un radical C₂-C₆-alkylène, un radical C₅-C₇-cycloalkylène ou une combinaison de ces radicaux, ces radicaux pouvant être substitués par 1 à 4 radicaux C₁-C₄-alkyle, hydroxy, C₁-C₄-alcoxy, (C₁-C₄)-hydroxyalkyle et/ou par 1 à 2 autres radicaux C₅-C₇-cycloalkyle ou X, lorsque h > 1, peut également être une combinaison des significations mentionnées ;
Y représente un groupe -O-, 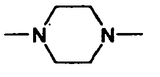 ou un groupe -NR²-, où Y, lorsque h > 1, peut également être une combinaison des significations mentionnées ;
R² et R³ représentent, indépendamment l'un de l'autre, un atome d'hydrogène, un groupe C₁-C₂₀-alkyle substitué ou non substitué, partiellement fluoré ou perfluoré, ramifié ou non ramifié, un groupe C₅- C₈-cycloalkyle substitué ou non substitué ou un groupe C₂-C₂₀-alcényle substitué ou non substitué ou partiellement fluoré ou perfluoré, où les substituants sont des substituants hydroxy, phényle, cyano, chlore, brome, amino, C₂-C₄-acyle ou C₁-C₄-alcoxy et peuvent de préférence être au nombre de 1 à 4, ou
R² et R³ ensemble avec l'atome de N du groupe NR² forment un cycle de 5 à 7 chaînons, saturé, insaturé ou aromatique, hétérocyclique, qui contient le cas échéant 1 ou 2 autres atomes d'azote, d'oxygène ou de soufre ou groupes carbonyle dans le cycle, le cas échéant substitué par 1, 2 ou 3 radicaux du groupe OH, NH₂, phényle, CN, Cl, Br, C₁-C₄-alkyle, C₁-C₄-alcoxy, C₂-C₄-acyle et carbamoyle, et qui porte le cas échéant 1 ou 2 cycles benzo-annelés, saturés, insaturés ou aromatiques, carbocycliques ou hétérocycliques ;
ou
Z² représente hydrogène, hydroxy, amino, phényle, (C₁- C₄)-alkylènephényle, C₅-C₃₀-cycloalkyle, C₂-C₃₀- alcényle, ou C₁-C₃₀-alkyle ramifié ou non ramifié, où le cycle phényle, le groupe (C₁-C₄)- alkylènephényle, le groupe C₅-C₃₀-cycloalkyle, le groupe C₂-C₃₀-alcényle et le groupe C₁-C₃₀-alkyle peuvent être substitués par un ou plusieurs, par exemple 1, 2, 3 ou 4, substituants du groupe Cl, Br, CN, NH₂, OH, C₆H₅, C₆H₅ substitué par 1, 2 ou 3 radicaux C₁-C₂₀-alcoxy, carbamoyle, carboxy, C₂-C₄- acyle, C₁-C₈-alkyle, NR²R³, où R² et R³ présentent la signification susmentionnée, et C₁-C₄-alcoxy, par exemple méthoxy ou éthoxy, ou le groupe alkyle et le groupe alcényle peuvent être perfluorés ou partiellement fluorés ;
G signifie un groupe divalent -CO-, -SO₂-, -SO₂N(R⁶)- R⁵-CO-, -SO₂N(R⁶)-R⁵-SO₂-, -CON(R⁶)-R⁵-CO- ou -CON(R⁶)-R⁵-SO₂-, et R⁵ signifie un radical hydrocarboné divalent, ramifié ou non ramifié, saturé ou insaturé, aliphatique, comprenant 1 à 20 atomes de carbone, ou un radical C₅-C₇- cycloalkylène, ou un radical aromatique divalent comprenant 1, 2 ou 3, de préférence 1 ou 2 cycles aromatiques, les cycles pouvant être condensés ou liés par une liaison, tel que par exemple un radical phényle, biphényle ou naphtyle, ou un radical hétérocyclique comprenant 1, 2 ou 3 cycles, qui contient 1, 2, 3 ou 4 hétéroatomes du groupe O, N et S, ou une combinaison de ceux-ci ; où les radicaux hydrocarbonés, cycloalkylène, aromatiques et hétéroaromatiques susmentionnés peuvent être substitués par 1, 2, 3 ou 4 substituants du groupe OH, CN, F, Cl, Br, NO₂, CF₃, C₁-C₆-alcoxy, S-C₁-C₆-alkyle, NHCONH₂, NHC(NH)NH₂, NHCO-C₁-C₆-alkyle, C₁-C₆-alkyle, COOR²⁰, CONR²⁰R²¹ NR²⁰R²¹, SO₃R²⁰ ou SO₂-NR²⁰R²¹, où R²⁰ et R²¹ sont identiques ou différents et signifient hydrogène, phényle ou C₁-C₆-alkyle, et R⁶ signifie hydrogène, R⁵-H, R⁵-COO⁻E⁺ ou R⁵-SO₃⁻E⁺ ; et
E⁺ représente H⁺ ; l'équivalent M^{s+}/s d'un cation métallique M^{S+}, de préférence du 1er au 5ème groupe principal ou du 1er ou du 2ème ou du 4ème au 8ème groupe secondaire du système périodique des éléments chimiques, s étant un des nombres 1, 2 ou 3 ;
un ion de phosphonium ; ou un ion d'ammonium non substitué ou substitué.

8. Procédé selon l'une ou plusieurs des revendications 1 à 7, **caractérisé en ce que** ledit au moins un dispersant de pigments est utilisé en une quantité de 0,1 à 25% en poids, par rapport au pigment brut de phtalocyanine.

9. Procédé selon l'une ou plusieurs des revendications 1 à 8, **caractérisé en ce qu'**on utilise en outre des adjuvants du groupe des agents tensioactifs, des dispersants pigmentaires ou non pigmentaires, des charges, des agents thixotropiques, des résines, des cires, des antimousses, des agents antipoussière, des diluants, des colorants pour le nuançage, des conservateurs, des agents retardateurs du séchage, des additifs pour le réglage de la rhéologie, des mouillants, des antioxydants, des absorbants des UV, des stabilisateurs à la lumière ou une combinaison de ceux-ci.
